# EUROPEAN PATENT APPLICATION

(11) **EP 4 644 911 A1**
(43) Date of publication of application: **05.11.2025**
(21) Application number: 25173052.9
(22) Date of filing: 28.04.2025
(51) Int. Cl.: G01N 35/04

(54) **SAMPLE PROCESSING UNIT, SAMPLE LOADING UNIT, AND SAMPLE ANALYSIS SYSTEM**

(30) Priority: 29.04.2024 CN 202410537548; 09.04.2025 CN 202510440034
(71) Applicant: Shenzhen Mindray Bio-Medical Electronics Co., Ltd., Shenzhen, Guangdong 518057 (CN)
(72) Inventor: ZHAO, Xuke, Shenzhen, 518057 (CN); HUANG, Shanzhi, Shenzhen, 518057 (CN); WANG, Changxing, Shenzhen, 518057 (CN); LIANG, Zhun, Shenzhen, 518057 (CN)
(74) Representative: KIPA AB

(57) **Abstract**

A sample processing unit, a sample loading unit and a sample analysis system. The sample processing unit includes a sample loading component, a transfer component and an output component. The sample loading component includes first and second feed bins, a feeding mechanism and a flow limiting mechanism, the first feed bin forms a storage space storing sample containers received by the second feed bin and flowing from the second feed bin into the first feed bin, the feeding mechanism is connected to the first feed bin and transports the sample containers in the storage space to the transfer component one by one. When the sample containers flow from the second feed bin into the first feed bin, the flow limiting mechanism is configured to limit quantity of sample containers flowing into the storage space, and the storage space is capable of storing multiple sample containers.

## Description

### TECHNICAL FIELD

The disclosure relates to the technical field of medical devices, and in particular to a sample processing unit, a sample loading unit, and a sample analysis system.

### BACKGROUND

At present, there is a sample processing system, including a test tube pouring-out processing device. Disordered test tubes loaded with samples may be poured into the pouring-out processing device of the sample processing system, the pouring-out processing device may reorganize and output the test tubes in an ordered manner, and then the sample processing system may clamp the test tubes reorganized by the pouring-out processing device to a multi-hole sample rack or a single-hole/dual-hole sample seat, to achieve automatic processing of the disordered test tubes, such that an operation of manual insertion of the test tubes into a test tube rack may be omitted, and a purpose of saving manpower is achieved. When volume of a feed bin of the pouring-out processing device is limited, if a large number of test tubes are poured into the feed bin in a short time, blockage of the test tubes may occur, causing the test tubes to get stuck and affecting output of the test tubes.

### SUMMARY

The disclosure is intended to solve at least one of technical problems present in the related art. To this end, the disclosure provides a sample processing unit capable of limiting flow by a flow limiting mechanism, thereby alleviating the problem of blockage of sample containers in the feed bin.

The disclosure further provides a sample loading unit.

The disclosure further provides a sample analysis system, to which the foregoing sample processing unit is applied.

A sample processing unit according to a first embodiment of the disclosure includes a sample loading component, a transfer component and an output component.

The sample loading component includes a first feed bin, a second feed bin, a feeding mechanism and a flow limiting mechanism, the first feed bin includes a bin bottom wall and a bin side wall connected to the bin bottom wall, a storage space is formed by the bin bottom wall and the bin side wall and is configured to store sample containers received by the second feed bin and flowing from the second feed bin into the first feed bin, the feeding mechanism is connected to the first feed bin and is configured to transport the sample containers in the storage space to the transfer component one by one.

The transfer component is configured to receive a single sample container transported by the feeding mechanism, and transfer the single sample container to the output component.

The output component is configured to receive the single sample container from the transfer component, and output the single sample container or at least one said single sample container carried on a sample carrying component.

When the sample containers flow from the second feed bin into the first feed bin, the flow limiting mechanism is configured to limit a quantity of the sample containers flowing into the storage space, and the storage space is configured to be capable of storing multiple of the sample containers.

The sample processing unit according to the embodiment of the disclosure has at least the following advantageous effects.

According to the disclosure, the quantity of the sample containers flowing into the storage space is limited by the flow limiting mechanism, such that even when a large number of sample containers are poured into the second feed bin in a short time, flow of the sample containers is limited by the flow limiting mechanism, and therefore the sample containers can gradually enter the first feed bin in a relatively long time, and the problem of blockage of the sample containers in the first feed bin is alleviated.

In other embodiments of the disclosure, the flow limiting mechanism may define a transmission channel that transmits the sample containers, the transmission channel is configured to taper toward the storage space in an inflow direction of the sample containers.

In other embodiments of the disclosure, the bin side wall may be provided with a first opening that allows the sample containers to flow from the second feed bin into the first feed bin, the flow limiting mechanism includes a flow limiting component of which at least a portion is extended into the storage space.

The transmission channel includes a guide space between the extended portion of the flow limiting component and the first opening, and the guide space is connected with the first opening and is arranged to open toward at least the bin bottom wall.

And/or, the flow limiting component is arranged at an upper side of the first opening and is inclinedly extended toward the bin bottom wall, and the flow limiting component, the bin side wall and the bin bottom wall define the transmission channel together.

In other embodiments of the disclosure, the flow limiting mechanism may include an adjusting component, and may be configured to adjust an extension length of the transmission channel in the inflow direction of the sample containers through the adjusting component and/or adjust a size of an outlet of the transmission channel through the adjusting component.

In other embodiments of the disclosure, the flow limiting mechanism may further include a flow limiting component of which at least a portion is extended into the storage space, the flow limiting component is connected to the first feed bin through the adjusting component. The flow limiting component is configured to move relative to the first feed bin through the adjusting component, to adjust the extension length of the transmission channel in the inflow direction of the sample containers; and/or, the flow limiting component is configured to rotate relative to the first feed bin through the adjusting component, to adjust the size of the outlet of the transmission channel.

In other embodiments of the disclosure, the adjusting component may include a first adjusting part, a second adjusting part, a first locking component and a second locking component, the first adjusting part is connected to the first feed bin, the second adjusting part is movably connected to the first adjusting part, the flow limiting component is movably connected to the second adjusting part, the first locking component is configured to lock the first adjusting part and the second adjusting part, and the second locking component is configured to lock the flow limiting component and the second adjusting part.

When the first locking component unlocks, the second adjusting part is capable of driving the flow limiting component to rotate relative to the first adjusting part, to adjust the size of the outlet of the transmission channel; and when the second locking component unlocks, the flow limiting component is capable of moving relative to the second adjusting part, to adjust the extension length of the transmission channel in the inflow direction of the sample containers.

In other embodiments of the disclosure, the flow limiting mechanism may be arranged at an outer side of the bin side wall, the transmission channel is defined at an interior of the flow limiting mechanism, and two ends of the transmission channel are respectively connected with the first feed bin and the second feed bin.

In other embodiments of the disclosure, the flow limiting mechanism may be configured to allow multiple of the sample containers to pass through together.

In other embodiments of the disclosure, the flow limiting mechanism may define a transmission channel that transmits the sample containers.

A volume of the transmission channel is greater than a sum of volumes of at least two of the sample containers.

And/or, a length of an inlet of the transmission channel is greater than an axial length of the single sample container, and/or, a width of the inlet of the transmission channel is greater than a sum of diameters of at least two of the sample containers.

And/or, a length of an outlet of the transmission channel is greater than the axial length of the single sample container, and/or, a width of the outlet of the transmission channel is greater than the sum of diameters of at least two of the sample containers.

And/or, a length of a cross-section of the transmission channel perpendicular to an inflow direction of the sample containers is greater than the axial length of the single sample container, and/or, a width of the cross-section is greater than the sum of diameters of at least two of the sample containers, and/or, an area of the cross-section is greater than a sum of areas of cross-sections of at least two of the sample containers perpendicular to axial directions thereof.

And/or, an area of the inlet of the transmission channel is greater than an area of the outlet of the transmission channel.

In other embodiments of the disclosure, the flow limiting mechanism may be configured to allow the sample containers to pass through the transmission channel continuously.

In other embodiments of the disclosure, the sample loading component may further include a stirring mechanism connected to the first feed bin, the stirring mechanism includes a stirring component and a first driving component, and the stirring component is configured to be capable of being driven by the first driving component, to stir the sample containers.

In other embodiments of the disclosure, the stirring component may be arranged at bottom of the first feed bin and is capable of being driven by the first driving component, to move relative to the bin bottom wall to stir the sample containers.

In other embodiments of the disclosure, the stirring component may be configured to move in an up-down direction relative to the bin bottom wall of the first feed bin, to stir the sample containers.

In other embodiments of the disclosure, the stirring component may be inclinedly arranged relative to a horizontal plane, may be inclined toward the feeding mechanism, and may be configured to move up and down in an inclined direction relative to the bin bottom wall.

In other embodiments of the disclosure, the stirring component may include a first stirring part spaced from the feeding mechanism, and a minimum distance between the first stirring part and the feeding mechanism in an arrangement direction of the first stirring part and the feeding mechanism is greater than a diameter of the sample container.

And/or, the stirring component includes a second stirring part spaced from the feeding mechanism, and a maximum distance between the second stirring part and the feeding mechanism in an arrangement direction of the second stirring part and the feeding mechanism is less than the diameter of the sample container.

And/or, the stirring component includes a first stirring part and a second stirring part spaced there-between, the second stirring part is arranged at a side of the first stirring part facing the feeding mechanism, and a minimum distance between the first stirring part and the second stirring part in an arrangement direction of the first stirring part and the second stirring part is greater than the diameter of the sample container.

In other embodiments of the disclosure, a guide part may be arranged at a top of the stirring component, and may be configured to guide the sample containers to slide along the guide part to change poses of the sample containers while the sample containers abut against the guide part and the stirring component moves up and down relative to the bin bottom wall.

In other embodiments of the disclosure, the stirring component may include a first side and a second side arranged opposite to each other, and the guide part includes a first guide surface and a second guide surface arranged sequentially in a direction pointing from the first side to the second side.

A distance between the first guide surface and the bin bottom wall decreases in the direction pointing to the second side from the first side, and a distance between the second guide surface and the bin bottom wall decreases in a direction pointing from the second side to the first side.

Preferably, the stirring component includes a first stirring part spaced from the feeding mechanism, a minimum distance between the first stirring part and the feeding mechanism in an arrangement direction of the first stirring part and the feeding mechanism is greater than a diameter of the sample container, and the first guide surface and the second guide surface are arranged at a top of the first stirring part.

Preferably, the stirring component includes a second stirring part spaced from the feeding mechanism, a maximum distance between the second stirring part and the feeding mechanism in an arrangement direction of the second stirring part and the feeding mechanism is less than the diameter of the sample container, and the first guide surface and the second guide surface are arranged at a top of the second stirring part.

In other embodiments of the disclosure, the feeding mechanism may include a fixed component, a movement component and a second driving component, the fixed component is connected to the first feed bin, the movable component is movably connected to the fixed component and is capable of being driven by the second driving component, to move relative to the fixed component, so as to transport the single sample container.

Preferably, the first driving component and the second driving component are the same driving component.

In other embodiments of the disclosure, the bin side wall may include multiple side plates arranged sequentially in a circumferential direction of the bin bottom wall, one of the side plates is provided with a first opening that allows the sample containers to flow from the second feed bin into the first feed bin, at least one of other remaining side plates is provided with a second opening for a user to interact with the first feed bin, the first feed bin further includes a first door body connected to the side plate provided with the second opening, to open or close the second opening.

In other embodiments of the disclosure, the sample processing unit may further include a housing component, the housing component includes a first housing and a second housing which are independent of each other, the first feed bin is arranged in the first housing, the second feed bin is arranged in the second housing, the first housing includes a second door body and is provided with a third opening corresponding to the second opening, and the second door body opens and closes the third opening.

In other embodiments of the disclosure, the first feed bin may further include a guide component provided with a guide surface, the guide surface is configured to guide the sample containers to slide along the guide surface to change poses of the sample containers while the sample containers abut against the guide surface.

The sample processing unit includes at least one of following solutions:
the bin side wall includes multiple side plates arranged sequentially in a circumferential direction of the bin bottom wall, and for all pairs of adjacent side plates, a guide component is arranged at an included angle between at least one pair of adjacent side plates;
and/or, the first feed bin further includes a functional structure protruded from an inner surface of the bin side wall, and the guide component is arranged at a side of the functional structure facing a first opening that allows the sample containers to flow from the second feed bin into the first feed bin;
and/or, the first feed bin further includes a functional structure protruded from the inner surface of the bin side wall, and the guide component is arranged at a side of the functional structure facing the feeding mechanism;
and/or, the first feed bin further includes a functional structure protruded from the inner surface of the bin side wall, and the guide component is arranged at an upper side of the functional structure;
and/or, the first feed bin further includes a functional structure protruded from the inner surface of the bin side wall, and the guide component is arranged at a lower side of the functional structure;
and/or, the first feed bin further includes a functional structure protruded from the inner surface of the bin side wall, and the guide component is arranged to cover an outer side of the functional structure.

In other embodiments of the disclosure, the feeding mechanism may include at least one first feeding component and a second driving component, the at least one first feeding component includes a single movable plate and a single fixed plate arranged side by side, the fixed plate is fixedly arranged relative to the first feed bin, the second driving component is connected to the movable plate to drive the movable plate to reciprocate between a first position and a second position relative to the fixed plate. While the movable plate is at the first position, a top end of the movable plate is lower than a top end of the fixed plate, the top end of the movable plate receives the single sample container; and while the movable plate is at the second position, the top end of the movable plate is not lower than the top end of the fixed plate, the single sample container is transferred from the top end of the movable plate to the top end of the fixed plate.

The fixed plate includes a main body and at least two protrusions supporting the single sample container, the at least two protrusions are connected to an upper end of the main body and are arranged at intervals in an extension direction of the upper end of the main body, a distance between two adjacent ones of the protrusions is less than a length of the sample container, a separation surface arranged inclinedly is formed at the upper end of the main body, and in the first feeding component, the separation surface is inclinedly arranged downward in a direction toward the movable plate.

In other embodiments of the disclosure, the distance between two adjacent ones of the protrusions may be greater than a diameter of the sample container.

And/or, the at least two protrusions are symmetrically arranged at the upper end of the main body with a central axis of the main body as a symmetry axis.

In other embodiments of the disclosure, the sample processing unit may further include a housing component, the housing component includes a first housing and a second housing which are independent of each other, the first feed bin, the transfer component and the output component are arranged in the first housing, and the second feed bin is arranged in the second housing.

A sample loading unit according to a second embodiment of the disclosure includes a first housing and a sample loading component arranged in the first housing.

The sample loading component includes a first feed bin and a feeding mechanism, the first feed bin is formed with a storage space and a first opening connected with the storage space, the storage space is configured to store sample containers flowing into the storage space through the first opening, and the feeding mechanism is connected to the first feed bin and is configured to output the sample containers in the storage space one by one.

The storage space is connected with the first opening through a transmission channel, and the transmission channel is configured to taper toward the storage space in an inflow direction of the sample containers, to limit a quantity of the sample containers flowing into the storage space.

In other embodiments of the disclosure, the sample loading component may further include a flow limiting mechanism defining the transmission channel.

In other embodiments of the disclosure, the first feed bin may include a bin bottom wall and a bin side wall connected to the bin bottom wall, the storage space is formed by the bin bottom wall and the bin side wall, the bin side wall is provided with the first opening, and the flow limiting mechanism includes a flow limiting component of which at least a portion is extended into the storage space.

The transmission channel includes a guide space between the extended portion of the flow limiting component and the first opening, and the guide space is connected with the first opening and is arranged to open toward at least the bin bottom wall.

And/or, the flow limiting component is arranged at an upper side of the first opening and is inclinedly extended toward the bin bottom wall, and the flow limiting component, the bin side wall and the bin bottom wall define the transmission channel together.

In other embodiments of the disclosure, the sample loading unit may further include a second feed bin connected with the first feed bin through the first opening, the sample containers are capable of being received by the second feed bin and flowing from the second feed bin into the first feed bin.

A sample analysis system according to a third embodiment of the disclosure includes the sample processing unit, a sample analysis unit and a transmission unit.

The sample analysis unit is configured to analyze a sample in the single sample container.

The transmission unit is connected to the sample processing unit and the sample analysis unit, and is configured to transport the single sample container or the sample carrying component output from the sample processing unit to the sample analysis unit.

Additional aspects and advantages of the disclosure will be partially given in the following descriptions, and parts thereof will become apparent from the following descriptions, or will be understood by practice of the disclosure.

### BRIEF DESCRIPTION OF THE DRAWINGS

The disclosure will be further described below with reference to the drawings and embodiments, in which:
FIG. 1 is a schematic perspective view of a sample processing unit according to an embodiment of the disclosure.
FIG. 2 is a schematic diagram of the sample processing unit of FIG. 1 with a housing hidden.
FIG. 3 is a schematic diagram of the sample processing unit of FIG. 1 showing that a first feed bin is arranged in a first housing.
FIG. 4 is a schematic diagram showing a connection relationship among a first feed bin, a feeding mechanism and a flow limiting mechanism of FIG. 1.
FIG. 5 is a schematic exploded view of FIG. 4.
FIG. 6 is a schematic cross-sectional view of FIG. 4.
FIG. 7 is a schematic diagram showing a connection relationship between a first feed bin and a flow limiting mechanism of FIG. 1.
FIG. 8 is a schematic diagram of FIG. 7 in another direction.
FIG. 9 is a schematic perspective view of a feeding mechanism of FIG. 1.
FIG. 10 is a schematic perspective view of an adjusting component according to an embodiment of the disclosure.
FIG. 11 is a front view of one of side plates in a bin side wall of FIG. 1.
FIG. 12 is a schematic perspective view of FIG. 11.
FIG. 13 is a schematic perspective view of FIG. 12 with a guide component hidden.
FIG. 14 is a schematic perspective view of a fixed plate according to an embodiment of the disclosure.
FIG. 15 is a schematic diagram of modules of a sample analysis system according to an embodiment of the disclosure.

### List of reference numerals:

sample processing unit 1;
sample analysis unit 2;
transmission unit 3;
housing component 100, first housing 110, third opening 111, second door body 112, second housing 120,
sample loading component 200, first feed bin 210, bin bottom wall 211, through groove 2111, bin side wall 212, first opening 2121, second opening 2122, first door body 213, first side plate 214, second side plate 215, second feed bin 220, inlet 221, feeding mechanism 230, fixed plate 231, main body 2311, convex part 2312, separation surface 2313, movable plate 232, second driving component 233, stirring mechanism 240, stirring component 241, first stirring part 241a, second stirring part 241b, first guide surface 2411, second guide surface 2412, storage chamber 250, flow limiting mechanism 260, transmission channel 261, guide space 261a, flow limiting component 262, adjusting component 263, first adjusting component 2631, second adjusting component 2632, first locking component 2633, second locking component 2634, communication component 270, guide component 280, guide surface 281, functional structure 290
transfer component 300;
output component 400.

### DETAILED DESCRIPTION

Embodiments of the disclosure will be described in detail below, examples of which are shown in the drawings, and the same or similar reference numerals denote the same or similar elements or elements having the same or similar functions throughout the drawings. The embodiments described below with reference to the drawings are exemplary, are only intended to explain the disclosure, and cannot be understood as limitation of the disclosure.

In descriptions of the disclosure, it should be understood that descriptions of orientations are involved, for example, orientation or positional relationships indicated by "up", "down", "front", "back", "left", "right" or the like are based on orientation or positional relationships shown in the drawings, and are only intended to facilitate describing the disclosure and simplify descriptions, and do not indicate or imply that a referred device or element must have a specific orientation, or must be configured and operate in a specific orientation, and thus cannot be understood as limitation of the disclosure.

In the descriptions of the disclosure, "several" means more than one, "multiple" means more than two, and "greater than", "less than", "exceed" or the like are understood to exclude the number itself, and "above", "below", "within" or the like are understood to include the number itself. If "first" and "second" are described, they are only intended to distinguish technical features, and cannot be understood as indicating or implicating relative importance, or implicitly indicating a number of indicated technical features, or implicitly indicating a sequential relationship of indicated technical features.

In the descriptions of the disclosure, unless otherwise defined explicitly, words such as setting, mounting, connection or the like should be understood in a broad sense, and specific meanings of the above words in the disclosure may be reasonably determined by those skilled in the art with reference to specific contents of technical solutions.

In the descriptions of the disclosure, descriptions made with reference to terms "an embodiment", "some embodiments", "exemplary embodiment", "example", "specific example", or "some examples" or the like mean that specific features, structures, materials or characteristics described with reference to the embodiment or example are included in at least one embodiment or example of the disclosure. In the specification, schematic expressions of the above terms do not necessarily refer to the same embodiment or example. Furthermore, the described specific features, structures, materials or characteristics may be combined in a suitable manner in any one or more embodiments or examples.

As described above, at present, there is an application of a sample input/output module, the sample input/output module is integrated with a pouring-out sample loading unit capable of supporting disordered loading of sample containers in batch. Specifically, the pouring-out sample loading unit includes an inner bin and an outer bin, the inner bin is arranged at an interior of a shell of the sample input/output module, and the outer bin is arranged at exterior of the shell. After a user pours disordered sample containers into the outer bin, the sample containers will enter the inner bin from the outer bin, and will be sorted by a feeding mechanism and then output. Since the inner bin is arranged at an interior of the shell of the sample input/output module, and space in the shell is limited, then volume of the inner bin is usually limited too. With respect to such sample loading unit, if a large number of sample containers are poured into the outer bin in a short time, the sample containers may be blocked in the inner bin with a small volume, causing the feeding mechanism to fail to sort the sample containers normally, and thus affecting output of the sample containers. Based on the above problem, the disclosure provides a sample processing unit, the sample processing unit limits flow of sample containers entering a feed bin by providing a flow limiting mechanism, to alleviate the problem of blockage, which will be described below with reference to the drawings and specific embodiments.

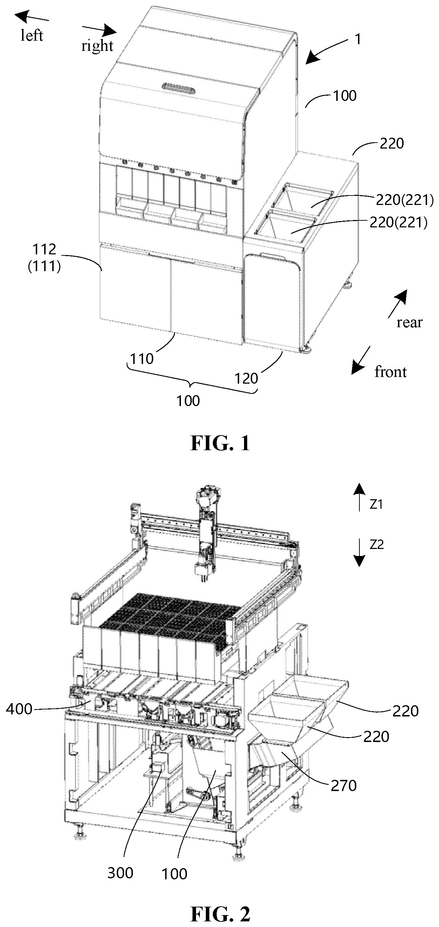

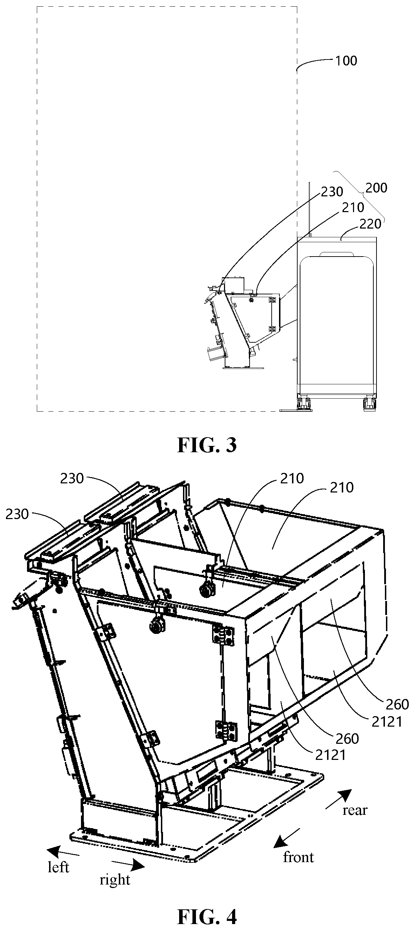

With reference to FIG. 1 to FIG. 3, a schematic perspective view of a sample processing unit 1 according to a first embodiment of the disclosure, a schematic perspective view with a housing component 100 hidden, and a brief schematic diagram showing a connection relationship between a sample loading component 200 and the housing component 100 are shown respectively. It should be noted that an approximate range of the housing component 100 is identified by a dashed box in FIG. 3. As shown in the figures, the sample processing unit 1 in the embodiment includes a housing component 100, a sample loading component 200, a transfer component 300 and an output component 400. The housing component 100 includes a first housing 110, the sample loading component 200, the transfer component 300 and the output component 400 are all connected to the first housing 110, and the transfer component 300 and the output component 400 are arranged in the first housing 110.

With reference to FIG. 3 and FIG. 4, the sample loading component 200 includes a first feed bin 210 and a feeding mechanism 230. The first feed bin 210 stores multiple sample containers, the feeding mechanism 230 sorts the sample containers in the first feed bin 210, thereby sorting out a single sample container and feeding the single sample container out in a set pose (such as a horizontal pose). Specifically, the first feed bin 210 is located in the first housing 110, that is, used as an inner bin of the sample loading component 200. With reference to FIG. 1, the housing component 100 further includes a second housing 120, the first housing 110 and the second housing 120 are independent of each other, for example, the first housing 110 and the second housing 120 are arranged side by side. With reference to FIG. 1 and FIG. 2, the sample loading component 200 further includes a second feed bin 220 connected with the first feed bin 210, the second feed bin 220 is located in the second housing 120, that is, used as an outer bin of the sample loading component 200. The second feed bin 220 is provided with an inlet 221 for the user to pour the sample containers, the inlet 221 is arranged at a position where it facilitates the user to pour, for example, at a top of the second feed bin 220. Based on the above structures, the user may directly pour the sample containers into the second feed bin 220, and the sample containers flow into the first feed bin 210 under gravity.

It should be noted that there may be one or multiple first feed bins 210 in number. As shown in FIG. 4, the sample loading component 200 includes two first feed bins 210 arranged side by side in a front-rear direction shown in the figure. Correspondingly, multiple feeding mechanisms 230 and multiple second feed bins 220 may also be provided. It should also be noted that when the sample loading component 200 is provided with the second feed bin 220, the first feed bin 210 may be directly connected to the second feed bin 220, and the sample containers may directly flow from the second feed bin 220 into the first feed bin 210; or, the first feed bin 210 may be connected to the second feed bin 220 through for example a communication component 270 shown in FIG. 2, the sample containers flow from the second feed bin 220 into the communication component 270, and then flow from the communication component 270 into the first feed bin 210.

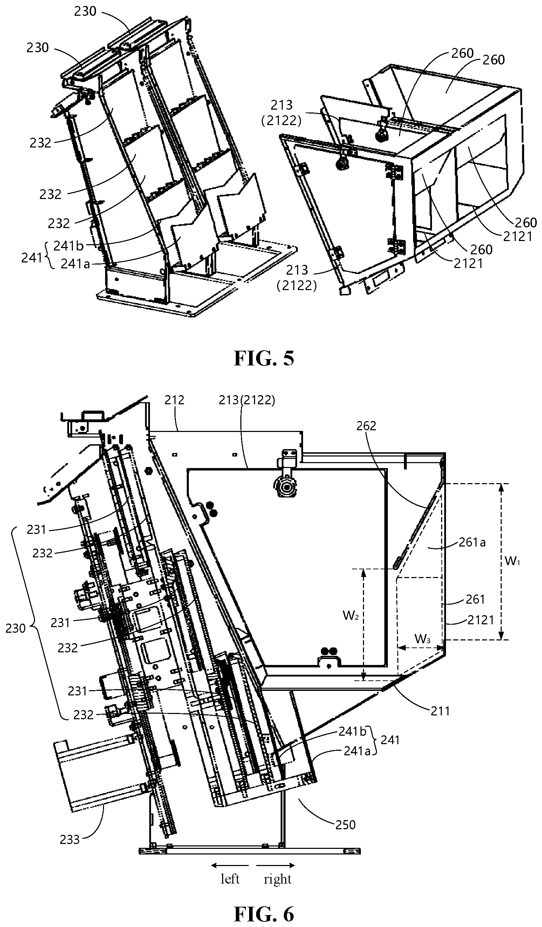

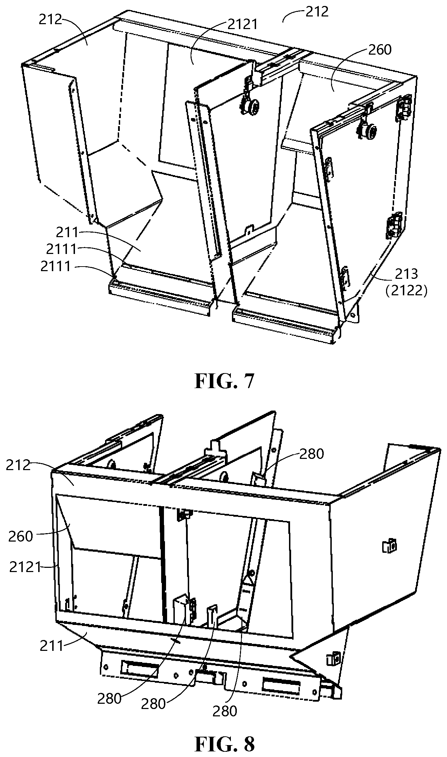

Specifically, in FIG. 6 to FIG. 8, the first feed bin 210 includes a bin bottom wall 211 and a bin side wall 212, the bin bottom wall 211 and the bin side wall 212 define a storage space together, and the storage space is configured to store sample containers entering the first feed bin 210, for example, store sample containers flowing from the second feed bin 220 into the first feed bin 210. In some specific embodiments, the first feed bin 210 further includes a bin top wall, and the bin bottom wall 211, the bin side wall 212 and the bin top wall define a substantially closed storage space together. In some other specific embodiments, top of the first feed bin 210 is arranged to open as shown in FIG. 4 and FIG. 5.

The transfer component 300 is configured to receive the single sample container sorted by the feeding mechanism 230, and transfer the single sample container to the output component 400. Movement of the transfer component 300 transferring the single sample container may include a horizontal movement, or a vertical movement, or a combination of the horizontal movement and the vertical movement. For example, the transfer component 300 includes a transmission rail arranged horizontally to transmit the sample container in a horizontal direction. For another example, the transfer component 300 includes a lifting mechanism arranged vertically and capable of transporting the sample container from a low position to a high position or from the high position to the low position. For another example, the transfer component 300 includes a flipping mechanism to flip the sample container from a horizontal pose to a vertical pose with a lid facing upward. In a specific embodiment, the transfer component 300 includes the foregoing transmission rail, flipping mechanism and lifting mechanism, the transmission rail transmits the sample container arranged horizontally to the flipping mechanism, the flipping mechanism drives the sample container to flip from a horizontal pose to a vertical pose, and then the lifting mechanism drives the flipping mechanism to move upward, such that the sample container arranged vertically moves to a high position. Specific manners in which the transfer component 300 transfers the sample container are not limited in the embodiment, for example, the transfer component 300 may drive the sample container to move horizontally through a transmission belt, or may push the sample container to move horizontally through a pushing mechanism.

The output component 400 is configured to receive the single sample container from the transfer component 300, and output the single sample container or at least one said single sample container carried on a sample carrying component. In some specific embodiments, the output component 400 is configured to output the single sample container, the output component 400 usually includes a robotic manipulator capable of transferring the single sample container, it is suitable for an analysis system using single tube seat as a carrier for transmission. For example, the analysis system includes a rail unit, and multiple vacant single tube seats are transmitted on the rail unit, then the output component 400 may directly transfer the single sample container into the single tube seat on the rail unit. In some other specific embodiments, the output component 400 is configured to output the sample carrying component carrying the single sample container, the output component usually includes a robotic manipulator capable of transferring the sample carrying component, or a pushing mechanism capable of pushing the sample carrying component out/in, and a storage area of the sample carrying component; and the output component is suitable for an analysis system using the sample carrying component as a carrier for transmission. For example, the analysis system includes a rail unit docked with the sample processing unit, and after receiving the single sample container from the transfer component 300, the output unit 400 transfers the single sample container to the sample carrying component in the storage area, and then further transfers the sample carrying component to the rail unit through the robotic manipulator or the pushing mechanism. Specifically, the sample carrying component refers to a component where the sample containers are placed, such as a tray or a sample rack, the tray or the sample rack is provided with multiple insertion holes, each insertion hole is suitable for placing one sample container, here the sample rack usually includes a single row of insertion holes, and the tray includes multiple rows and multiple columns of insertion holes arranged in an array.

As described above, the first feed bin 210 of the sample loading component 200 is arranged in the first housing 110. As shown in FIG. 2, since functional components such as the transfer component 300, the output component 400 or the like need to be placed in the first housing 110, volume of the first feed bin 210 is limited, and if too many sample containers enter the first feed bin 210 in a short time, there is a possibility of blockage. Based on this, with reference to FIG. 4 to FIG. 8, the sample loading component 200 further includes a flow limiting mechanism 260 which is configured to limit a quantity of the sample containers flowing into the storage space when the sample containers flow from the second feed bin 220 into the first feed bin 210, such that even when a large number of sample containers are poured into the second feed bin 220 in a short time, flow of the sample containers is limited by the flow limiting mechanism 260, and therefore the sample containers can gradually enter the first feed bin 210 in a relatively long time, and the problem of blockage of the sample containers in the first feed bin 210 is alleviated.

When the sample loading component 200 further includes the flow limiting mechanism 260, in some embodiments of the disclosure, with reference to FIG. 6, the flow limiting mechanism 260 defines a transmission channel 261 transmitting the sample containers, the transmission channel 261 is configured to taper toward the storage space in an inflow direction of the sample containers, such that a quantity of the sample containers output from the transmission channel 261 is less than a quantity of input sample containers, thereby achieving a flow limiting function. It should be noted that "defines a transmission channel 261 transmitting the sample containers" mentioned here includes both a solution in which the flow limiting mechanism 260 itself may define the transmission channel 261, and a solution in which the flow limiting mechanism 260 and other mechanisms define the transmission channel 261 together. Furthermore, it should also be noted that a position at which the flow limiting mechanism 260 is arranged is not limited in this embodiment, and the flow limiting mechanism 260 may be located inside or outside the first feed bin 210, which will be described in subsequent embodiments.

When the flow limiting mechanism 260 defines the transmission channel 261 transmitting the sample containers, in some embodiments of the disclosure, with reference to FIG. 4 to FIG. 8, the bin side wall 212 is provided with a first opening 2121 that allows the sample containers to flow from the second feed bin 220 into the first feed bin 210, here the first opening 2121 has a shape suitable for a batch of sample containers to pass through and easy to form, such as a rectangular shape as shown in the figures. The first opening 2121 may be arranged at any side of the bin side wall 212, such as a side directly facing the feeding mechanism 230 as shown in FIG. 6.

The flow limiting mechanism 260 includes a flow limiting component 262 of which at least a portion is extended into the storage space. In this embodiment, the transmission channel 261 is formed between the extended portion of the flow limiting component 262 and a corresponding structure of the first feed bin 210. In other words, at least a portion of the transmission channel 261 of this embodiment is arranged at an interior of the first feed bin 210. Specifically, as shown in FIG. 6 to FIG. 8, the transmission channel 261 includes a guide space 261a between the extended portion of the flow limiting component 262 and the first opening 2121, and the guide space 261a is connected with the first opening 2121 and is arranged to open toward at least the bin bottom wall 211. When the sample containers flow into the first feed bin 210, the sample containers pass through the guide space 261a first. If there is a large number of sample containers in the first feed bin 210 at this time, newly entered sample containers may temporarily stay in the guide space 261a due to accumulation; however, since the guide space 261a is arranged to open toward the bin bottom wall 211, the sample containers are in an unstable state, and when the number of the sample containers below the guide space 261a is reduced (for example, when the sample containers are transferred toward the feeding mechanism 230 through stir of a stirring mechanism 240), the sample containers in the guide space 261a may automatically drop under gravity. Therefore, the flow limiting component 262 of this embodiment may play a certain guiding role in addition to limiting the flow, which may prevent the sample containers from being blocked in the transmission channel 261 due to tapered arrangement of the transmission channel 261.

It should be noted that the guide space 261a may be arranged to open toward the bin side wall, in addition to opening toward the bin bottom wall 211. For example, taking FIG. 4 as an example, when a front side and/or a rear side of the flow limiting component 262 is not extended to a side plate at a corresponding side of the bin side wall 212, a front side and/or a rear side of the guide space 261a is also arranged to open, which may remove limitation of the sample containers by the flow limiting component 262 in the front-rear direction, such that the sample containers detach from the guide space 261a more easily.

In some specific embodiments, in a direction toward the bin bottom wall 211, a distance between the flow limiting component 262 and the first opening 2121 increases, that is, a width of the guide space 261a increases. In other words, a local area directly connected with the first opening 2121 and having a gradually increased width is formed in the transmission channel 261 tapered as a whole, thereby further enhancing the guiding function, preventing the flow limiting component 262 from hindering downward movement of the sample containers, and thus preventing blockage in the transmission channel 261. Taking FIG. 6 as an example, the flow limiting component 262 is a flow limiting plate inclinedly arranged as a whole, to form the guide space 261a gradually increased in a width direction. In some other specific embodiments, the flow limiting component 262 may be a flow limiting seat provided with an inclined flow limiting surface at a side facing the first opening 2121, the flow limiting surface forms the guide space 261a with the first opening 2121.

When the flow limiting mechanism 260 includes the foregoing flow limiting component 262 of which at least a portion is extended into the first feed bin 210, in some embodiments of the disclosure, with reference to FIG. 4 to FIG. 8, the flow limiting component 262 is arranged at an upper side of the first opening 2121 and is inclinedly extended toward the bin bottom wall 211, and the flow limiting component 262, the bin side wall 212 and the bin bottom wall 211 define the transmission channel 261 together. In general, in order to facilitate the user to pour, a height of the second feed bin 220 is higher than a height of the first feed bin 210, and therefore the sample containers will flow into the first feed bin 210 from a high place. In this embodiment, the flow limiting component 262 is arranged at the upper side of the first opening 2121, which may play a better flow limiting function on the sample containers flowing downward.

A solution in which the transmission channel 261 is arranged at an interior of the first feed bin 210 has been described above. In some other embodiments, the transmission channel 261 may also be arranged at exterior of the first feed bin 210. Specifically, the flow limiting mechanism 260 is arranged at an outer side of the bin side wall 260, the transmission channel 261 is defined at an interior of the flow limiting mechanism 260, and two ends of the transmission channel 261 are respectively connected with the first feed bin 210 and the second feed bin 220. For example, the communication component 270 in FIG. 2 may be used as the flow limiting mechanism 260.

It should be noted that "the flow limiting mechanism 260 is arranged at the outer side of the bin side wall 212" may include a solution in which the flow limiting mechanism 260 is arranged in the second housing 120, or may include a solution in which the flow limiting mechanism 260 is arranged between the first housing 110 and the second housing 120.

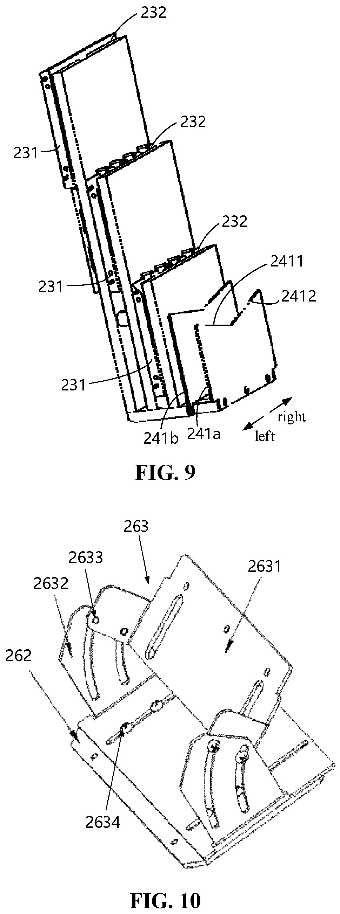

When the flow limiting mechanism 260 defines the transmission channel 261, in some embodiments of the disclosure, with reference to FIG. 10, the flow limiting mechanism 260 includes an adjusting component 263, and is configured to adjust an extension length of the transmission channel 261 in the inflow direction of the sample containers through the adjusting component 263 and/or adjust a size of an outlet of the transmission channel 261 through the adjusting component 263, thereby adjusting a flow limiting capability of the flow limiting mechanism 260.

In some embodiments, when the flow limiting mechanism 260 includes the flow limiting component 262 of which at least a portion is extended into the storage space, with reference to FIG. 10, the flow limiting component 262 is connected to the first feed bin 210 through the adjusting component 263. The flow limiting component 262 is configured to move relative to the first feed bin 210 through the adjusting component 263, to adjust a distance between a free end of the flow limiting component 262 and the first opening 2121, thereby adjusting the extension length of the transmission channel 261 in the inflow direction of the sample containers; and/or, the flow limiting component 262 is configured to rotate relative to the first feed bin 210 through the adjusting component 263, to adjust an inclined angle of the flow limiting component 262 relative to the first opening 2121, thereby adjusting the size of the outlet of the transmission channel 261.

In some specific embodiments, with reference to FIG. 10, the adjusting component 263 may simultaneously achieve adjustment of the extension length of the transmission channel 261 and adjustment of the opening, and specifically includes a first adjusting part 2631, a second adjusting part 2632, a first locking component 2633 and a second locking component 2634, the first adjusting part 2631 is connected to the first feed bin 210, the second adjusting part 2632 is movably connected to the first adjusting part 2631, the flow limiting component 262 is movably connected to the second adjusting part 2632, the first locking component 2633 locks the first adjusting part 2631 and the second adjusting part 2632, and the second locking component 2634 locks the flow limiting component 262 and the second adjusting part 2632. When the first locking component 2633 unlocks, the second adjusting part 2632 is capable of driving the flow limiting component 262 to rotate relative to the first adjusting part 2631, to adjust the size of the outlet of the transmission channel 261; and when the second locking component 2634 unlocks, the flow limiting component 262 is capable of moving relative to the second adjusting part 2632, to adjust the extension length of the transmission channel 261 in the inflow direction of the sample containers.

Specifically, in the embodiment as shown in the figure, the first adjusting part 2631 and the second adjusting part 2632 have plate-shaped structures respectively, and the first locking component 2633 and the second locking component 2634 are threaded fasteners respectively. The first adjusting part 2631 includes a first bottom plate and a first connection plate connected to the first bottom plate, the second adjusting part 2632 includes a second bottom plate and a second connection plate connected to the second bottom plate, one of the first connection plate and the second connection plate is provided with an arcuate groove, another one of the first connection plate and the second connection plate is provided with a first hole, and the first locking component 2633 is arranged to pass through the first hole and extends into the arcuate groove, such that when the first locking component 2633 slides in the groove, the first adjusting part 2631 and the second adjusting part 2632 may rotate relative to each other. Further, one of the first bottom plate and the flow limiting component 262 is provided with a linear groove, another one of the first bottom plate and the flow limiting component 262 is provided with a second hole, and the second locking component 2634 is arranged to pass through the first hole and extends into the linear groove, such that when the second locking component 2634 slides in the groove, the second adjusting part 2632 and the flow limiting component 262 may move relative to each other.

In some embodiments of the disclosure, the flow limiting mechanism 260 may also allow multiple sample containers to pass through together. That is, although the flow limiting mechanism 260 has a flow limiting function, it is qualified as long as it can ensure that the quantity of sample containers entering the first feed bin 210 from the second feed bin 220 is less than the quantity of sample containers entering the second feed bin 220. The sample containers may maintain a relatively small but not too small quantity for transmission, ensuring transmission efficiency of the sample containers from the second feed bin 220 to the first feed bin 210, thereby helping to improve an overall transmission efficiency of the sample containers in the sample loading component 200. When the flow limiting mechanism 260 defines the transmission channel 261 transmitting the sample containers, "the flow limiting mechanism 260 may also allow multiple sample containers to pass through together" specifically means that the flow limiting mechanism 260 allows multiple sample containers to pass through the transmission channel 261 together.

It should be noted that "pass through together" as described above may be understood as multiple sample containers entering the transmission channel 261 together, or multiple sample containers leaving the transmission channel 261 together, or multiple sample containers moving together in the transmission channel 261.

When the flow limiting mechanism 260 defines the transmission channel 261, in some embodiments of the disclosure, a volume of the transmission channel 261 is greater than a sum of volumes of at least two of the sample containers. That is, at least two sample containers may be simultaneously present in the transmission channel 261, thereby allowing at least two sample containers to pass through together.

When the flow limiting mechanism 260 defines the transmission channel 261, in some embodiments of the disclosure, the transmission channel 261 is provided with an inlet. In some specific embodiments, when the flow limiting mechanism 260, the bin side wall 212 and the bin bottom wall 211 define the transmission channel 261 together as shown in FIG. 6, the inlet of the transmission channel 261 is the foregoing first opening 2121. When the flow limiting mechanism 260 itself defines the transmission channel 261, the inlet of the transmission channel 261 is formed at a communication part between the transmission channel 261 and the second feed bin 220. A length of the inlet of the transmission channel 261 (such as a size in a direction perpendicular to the page in FIG. 6) is greater than an axial length of the single sample container, such that it may allow the sample containers to enter the transmission channel 261 in a transverse pose. In some embodiments, a width W₁ of the inlet is greater than a sum of diameters of at least two of the sample containers, such that it may allow at least two of the sample containers to enter the transmission channel 261 together.

When the flow limiting mechanism 260 defines the transmission channel 261, in some embodiments of the disclosure, the transmission channel 261 is provided with an outlet. In some specific embodiments, when the flow limiting mechanism 260, the bin side wall 212 and the bin bottom wall 211 define the transmission channel 261 together as shown in FIG. 6, the outlet of the transmission channel 261 is formed between the flow limiting mechanism 260 and the bin bottom wall 211. When the flow limiting mechanism 260 itself defines the transmission channel 261, the inlet of the transmission channel 261 is formed at a communication part between the transmission channel 261 and the first feed bin 210. A length of the outlet of the transmission channel 261 (such as a size in the direction perpendicular to the page in FIG. 6) is greater than the axial length of the single sample container, such that it may allow the sample containers to leave the transmission channel 261 in a transverse pose. In some embodiments, a width W₂ of the outlet is greater than the sum of diameters of at least two of the sample containers, such that it may allow at least two of the sample containers to leave the transmission channel 261 together.

When the flow limiting mechanism 260 defines the transmission channel 261, in some embodiments of the disclosure, a length of a cross-section of the transmission channel perpendicular to a transmission direction (such as a downward direction in FIG. 6) of the sample containers (such as a size in the direction perpendicular to the page in FIG. 6) is greater than the axial length of the single sample container, such that it may allow the sample containers to move in the transmission channel 261 in a transverse pose. In some embodiments, a width W₃ of the cross-section is greater than the sum of diameters of at least two of the sample containers, such that it may allow at least two of the sample containers to move in the transmission channel 261.

When the flow limiting mechanism 260 defines the transmission channel 261, in some embodiments of the disclosure, an area of the cross-section of the transmission channel perpendicular to the transmission direction (such as the downward direction in FIG. 6) of the sample containers is greater than a sum of areas of cross-sections (that is, cross sections) of at least two of the sample containers perpendicular to axial directions thereof, such that it may allow at least two of the sample containers to leave the transmission channel 261 together.

When the flow limiting mechanism 260 defines the transmission channel 261, in some embodiments of the disclosure, an area of the inlet of the transmission channel 261 is greater than an area of the outlet of the transmission channel 261, thereby allowing the sample containers to enter the transmission channel 261 from the inlet with a relatively large quantity and to leave the transmission channel 261 with a relatively small quantity, and thus achieving the flow limiting function. Exemplarily, when the flow limiting mechanism 260, the bin side wall 212 and the bin bottom wall 211 define the transmission channel 261 together as shown in FIG. 6, the inlet of the transmission channel 261 is the foregoing first opening 2121, the outlet of the transmission channel 261 is formed between the flow limiting mechanism 260 and the bin bottom wall 211, then an area of the first opening 2121 is greater than an area of an opening between the flow limiting mechanism 260 and the bin bottom wall 211.

In some embodiments of the disclosure, the flow limiting mechanism is configured to allow the sample containers to pass through continuously. When the flow limiting mechanism 260 defines the transmission channel 261 transmitting the sample containers, "the flow limiting mechanism is configured to allow the sample containers to pass through continuously" specifically means that the flow limiting mechanism is configured to allow the sample containers to pass through the transmission channel 261 continuously, that is, the sample containers may not be artificially obstructed in the transmission channel 261, such that the sample containers are in a free movement state, and therefore it facilitates improving transmission efficiency. Furthermore, the flow limiting mechanism may use a simple mechanical structure to achieve the flow limiting function without control, which facilitates reducing cost.

It should be noted that "pass through continuously" as described above may be understood as multiple sample containers entering the transmission channel 261 continuously, for example, passing through the inlet of the transmission channel 261 continuously; or multiple sample containers leaving the transmission channel 261 continuously, for example, passing through the outlet of the transmission channel 261 continuously; or multiple sample containers moving continuously in the transmission channel 261.

Based on the first embodiment, in some embodiments of the disclosure, with reference to FIG. 5 and FIG. 6, the sample loading component 200 further includes a stirring mechanism 240 stirring the sample containers in the first feed bin 210, thereby driving the sample containers in the first feed bin 210 to move, and thus alleviating the problem of blockage and sticking of the sample containers, and facilitating the feeding mechanism 230 to sort out the single sample container. It should be noted that the specific movement manner of the stirring mechanism 240 is not limited in this embodiment, and the stirring function may be achieved in a rotation or movement manner, which will be described in subsequent embodiments.

When the sample loading component 200 further includes the stirring mechanism 240, in some embodiments of the disclosure, with reference to FIG. 5 and FIG. 6, the stirring mechanism 240 includes a stirring component 241 and a first driving component, the stirring component 241 is capable of being driven by the first driving component, to stir the sample containers. Specifically, the stirring component 241 is arranged at bottom of the first feed bin 210 and is capable of being driven by the first driving component, to move relative to the bin bottom wall 211 of the first feed bin 210, so as to stir the sample containers. When the stirring component 241 is arranged at the bottom of the first feed bin 210, the stirring component 241 may indirectly drive sample containers at an upper level to move when it stirs, thereby expanding an influence range of a stirring action. Furthermore, a loading position of the feeding mechanism 230 is also usually arranged at the bottom of the first feed bin 210, such that movement of the stirring component 241 at the bottom may directly drive sample containers close to the loading position to move, and movement amplitudes of the sample containers at these positions are large, which is more beneficial to disperse the sample containers.

It should be noted that "the stirring component 241 is arranged at bottom of the first feed bin 210" mentioned in the disclosure substantially describes a relative position between the stirring component 241 and the first feed bin 210, and may be understood as the stirring component 241 being closer to the bottom of the first feed bin 210 relative to the top of the first feed bin 210. Furthermore, the whole stirring component 241 may be located in the first feed bin 210, that is, the whole stirring component 241 may be located in the storage space, or only a portion of the stirring component 241 may be located in the first feed bin 210.

It should also be noted that the specific solution of the first driving component is not limited in this embodiment. When the stirring mechanism 240 stirs in a rotation manner, the first driving component may be a motor, and the motor may directly drive the stirring mechanism 240 to rotate, or may indirectly drive the stirring mechanism 240 to rotate through a transmission system such as a synchronous belt-synchronous wheel or the like; when the stirring mechanism 240 stirs in a movement manner, the first driving component may be a motor, and the motor indirectly drives the stirring mechanism 240 to move by a transmission system such as a synchronous belt-synchronous wheel, a screw-screw seat, a gear-rack or the like, or the first driving component may be an electric cylinder.

When the stirring mechanism 240 includes the stirring component 241 and the first driving component, in some embodiments of the disclosure, with reference to FIG. 5 and FIG. 6, the stirring component 241 is configured to move in an up-down direction relative to the bin bottom wall 211, so as to stir the sample containers. Specifically, when the stirring component 241 moves upward, top of the stirring component 241 will push the sample containers to move, and when the stirring component 241 moves downward, the sample containers will move to fill a space from which the stirring component 241 exits, such that stirring of the sample containers may be achieved as the stirring component 241 reciprocates.

It should be noted that "move in an up-down direction" mentioned in this embodiment may mean that the stirring component 241 moves up and down in a vertical direction, or may mean that the stirring component 241 moves upward in an inclined direction, in other words, it is qualified as long as movement of the stirring component 241 has a movement component in the vertical direction.

When the stirring component 241 moves in the up-down direction to stir the sample containers, in some embodiments of the disclosure, with reference to FIG. 6, the stirring component 241 is inclinedly arranged relative to a horizontal plane, with an inclined direction toward the feeding mechanism 230. For example, if the feeding mechanism 230 is located at a left side of the stirring mechanism 240, the stirring component 241 is inclined toward a left side direction in FIG. 6. Based on the foregoing structures, the stirring component 241 in this embodiment is configured to move up and down in an inclined direction relative to the bin bottom wall 211, such that in a process of the stirring component 241 moving upward, the stirring component 241 may drive the sample containers to move toward the feeding mechanism 230, in addition to driving the sample containers to move upward, thereby achieving a better stirring effect.

When the stirring mechanism 240 includes the stirring component 241 and the first driving component, in some embodiments of the disclosure, with reference to FIG. 5 and FIG. 6 and in combination with 9, the stirring component 241 includes a first stirring part 241a spaced from the feeding mechanism 230, and a minimum distance between the first stirring part 241a and the feeding mechanism 230 is greater than a diameter of the sample container in an arrangement direction of the first stirring part 241a and the feeding mechanism 230, for example, substantially in an inclined direction of the bin bottom wall 211 in FIG. 6, such that a gap between the first stirring part 241a and the feeding mechanism 230 may accommodate at least one sample container, which may facilitate accommodation of the sample containers between the first stirring part 241a and the feeding mechanism 230, and thus may facilitate the feeding mechanism 230 to obtain the sample containers from the gap, while stirring and dispersion functions are achieved.

It should be noted that a width of the gap between the first stirring part 241a and the feeding mechanism 230 may be constant, for example, when the feeding mechanism 230 is a push-plate transfer mechanism, the minimum distance between the first stirring part 241a and the feeding mechanism 230 actually refers to a minimum distance between the first stirring part 241a and a fixed plate 231 or a movable plate 232 at a lowest level, and a width of a gap between the first stirring part 241a and the fixed plate 231 or the movable plate 232 at the lowest level is constant when the first stirring part 241a is parallel to the fixed plate 231 or the movable plate 232 at the lowest level; or, the width of the gap between the first stirring part 241a and the feeding mechanism 230 may be changed. It should also be noted that the first feed bin 210 may store sample containers with different diameters, and at this time, "diameter of sample container" as mentioned refers to a maximum diameter of the sample container (including a container lid).

When the stirring mechanism 240 includes the stirring component 241 and the first driving component, in some embodiments of the disclosure, with reference to FIG. 5 and FIG. 6 and in combination with 9, the stirring component 241 includes a second stirring part 241b spaced from the feeding mechanism 230, and a maximum distance between the second stirring part 241b and the feeding mechanism 230 is less than a diameter of the single sample container in an arrangement direction of the second stirring part 241b and the feeding mechanism 230, for example, substantially in an inclined direction of the bin bottom wall 211 in FIG. 6, such that when the second stirring part 241b moves up and down relative to the bin bottom wall 211, the second stirring part 241b may push the sample containers adjacent to the feeding mechanism 230 to move, thereby preventing the sample containers from being in an upright pose. It should be noted that no matter the feeding mechanism 230 uses a push-plate solution or a chain-plate solution, the feeding mechanism 230 requires the single sample container to be in a horizontal pose when it transports the single sample container. Furthermore, in a process of transferring the sample containers from the first feed bin 210 to the feeding mechanism 230, the sample containers also need to be in a horizontal pose, or at least in an inclined pose. If the sample containers are in an upright pose, on one hand, it is difficult for the sample containers to be transferred to the feeding mechanism 230 (for example, top ends of the sample containers lean against the bin side wall, therefore the sample containers do not move to the feeding mechanism 230 under gravity), causing the sample containers to stay in the first feed bin 210; on the other hand, even though the sample containers are transferred to the feeding mechanism 230, the sample containers in an upright pose may affect further output thereof, thereby causing an alarm and shutdown. Based on this, in this embodiment, it may push the sample containers to fall down by providing the second stirring part 241b, thereby alleviating relevant problems caused by upright standing of the sample containers.

It should be noted that a width of the gap between the second stirring part 241b and the feeding mechanism 230 may be constant, for example, when the feeding mechanism 230 is a push-plate transfer mechanism, the maximum distance between the second stirring part 241b and the feeding mechanism 230 actually refers to a maximum distance between the second stirring part 241b and a fixed plate 231 or a movable plate 232 at a lowest level, and a width of a gap between the second stirring part 241b and the fixed plate 231 or the movable plate 232 at the lowest level is constant when the second stirring part 241b is parallel to the fixed plate 231 or the movable plate 232 at the lowest level; or, the width of the gap between the second stirring part 241b and the feeding mechanism 230 may be changed. It should also be noted that the first feed bin 210 may store sample containers with different diameters, and at this time, "diameter of sample container" as mentioned refers to a minimum diameter of the sample container (including a container lid).

When the stirring mechanism 240 includes the stirring component 241 and the first driving component, in some embodiments of the disclosure, with reference to FIG. 5 and FIG. 6 and in combination with 9, the stirring component 241 includes a first stirring part 241a and a second stirring part 241b, and the first stirring part 241a and the second stirring part 241b may be understood with reference to the foregoing embodiments. In this embodiment, the first stirring part 241a and the second stirring part 241b are spaced from each other, and the second stirring part 241b is located at a side of the first stirring part 241a facing the feeding mechanism 230. In this way, the stirring component 241 may not only achieve dispersion of the sample containers, but also reduce upright standing of the sample containers. In some specific embodiments, a minimum distance between the first stirring part 241a and the second stirring part 241b in an arrangement direction of the first stirring part 241a and the second stirring part 241b is greater than the diameter of the single sample container, such that a gap between the first stirring part 241a and the second stirring part 241b may accommodate at least one sample container. In some specific embodiments, a maximum distance between the first stirring part 241a and the second stirring part 241b in the arrangement direction of the first stirring part 241a and the second stirring part 241b is less than a length of the single sample container, such that dispersion of the sample containers may be achieved better.

It should be noted that in each of the foregoing embodiments, the first stirring part 241a may also achieve a certain effect of preventing upright standing, and the second stirring part 241b may also achieve a certain effect of stir and dispersion.

While the stirring component 241 moves in the up-down direction to stir the sample containers, in some embodiments of the disclosure, a guide part is arranged at a top of the stirring component 241, and is configured to guide the sample containers to slide along the guide part to change poses of the sample containers while the sample containers abut against a guide surface and the stirring component 241 moves in the up-down direction relative to the bin bottom wall 211. When the sample containers are in a certain specific pose, it is also difficult for the stirring component 241 to directly stir and disperse the sample containers. For example, container lids of the sample containers are hung at the top of the stirring component 241, top ends of the sample containers are placed on the bin bottom wall 211, while axes of the sample containers are substantially in a vertical plane. In this way, as the stirring component 241 moves up and down, the sample containers may change only included angles with the stirring component 241 (for example, change from being inclined relative to the stirring component 241 to substantially parallel to the stirring component 241) while may not detach from the stirring component 241, which also causes stay of the sample containers. In this embodiment, the guide part is provided, such that the sample containers may be driven to change their own poses through up and down movement of the stirring component 241, thereby alleviating the problem of stay of the sample containers.

When the guide part is arranged at the top of the stirring component 241, in some embodiments of the disclosure, with reference to FIG. 9, the stirring component includes a first side and a second side arranged opposite to each other, for example, the first side is a left side in the figure, the second side is a right side in the figure. The guide part includes a first guide surface 2411 and a second guide surface 2412 arranged sequentially in a direction pointing from the first side to the second side, such as a direction from left to right in the figure.

A distance between the first guide surface 2411 and the bin bottom wall 211 decreases in the direction pointing from the first side to the second side, for example, the first guide surface 2411 may be an inclined surface or an arcuate surface. When container lids of the sample containers are hung at a high position of the first guide surface 2411 (such as a left side of the first guide surface 2411) and axes of the sample containers are substantially in the vertical plane, the sample containers may slide to a low position (such as a right side of the first guide surface 2411) along the first guide surface 2411 under gravity as the stirring component 241 moves up and down, and the whole sample containers may also fall down, that is, the axes of the sample containers are not in the vertical plane any more. In this way, when the sample containers fall down to a certain angle, sample lids will detach from the first guide surface 2411 under gravity.

A distance between the second guide surface 2412 and the bin bottom wall 211 decreases in a direction pointing from the second side to the first side, for example, the first guide surface 2411 may be an inclined surface or an arcuate surface, and an action manner of the second guide surface 2412 may be understood with reference to the first guide surface 2411.

The first guide surface 2411 and the second guide surface 2412 are provided, such that no matter the sample containers are hung and connected to the first side or the second side of the stirring component 241, the problem of stay of the sample containers may be effectively alleviated.

When the guide part includes the first guide surface 2411 and the second guide surface 2412, in some embodiments of the disclosure, with reference to FIG. 9, an end of the first guide surface 2411 away from the second guide surface 2412 is extended to the first side, for example, a left end of the first guide surface 2411 is extended to the left side of the stirring component 241; an end of the second guide surface 2412 away from the first guide surface 2411 is extended to the second side, for example, a right end of the second guide surface 2412 is extended to the right side of the stirring component 241. In this way, it may prevent a plane for easy hanging connection from being formed between the first guide surface 2411 and the left side of the stirring component 241 and between the second guide surface 2412 and the right side of the stirring component 241.

When the guide part includes the first guide surface 2411 and the second guide surface 2412, in some embodiments of the disclosure, with reference to FIG. 9, an end of the first guide surface 2411 away from the second guide surface 2412 intersects an end of the second guide surface 2412 away from the first guide surface 2411, thereby preventing a plane for easy hanging connection from being formed between the first guide surface 2411 and the second guide surface 2412.

It should be noted that in some specific embodiments, when the stirring component 241 includes the first stirring part 241a in the foregoing embodiments, the first guide surface 2411 and the second guide surface 2412 may be arranged at a top of the first stirring part 241a, to enhance an anti-upright function of the first stirring part 241a. In some other specific embodiments, when the stirring component 241 includes the second stirring part 241b in the foregoing embodiments, the first guide surface 2411 and the second guide surface 2412 may be arranged at a top of the second stirring part 241b, to enhance an anti-upright function of the second stirring part 241b.

While the stirring component 241 moves in the up-down direction to stir the sample containers, in some embodiments of the disclosure, with reference to FIG. 6, the sample loading component 200 further includes a storage chamber 250 arranged below the first feed bin 210, the bin bottom wall 211 of the first feed bin 210 is provided with a through groove 2111 connected with the storage chamber 250, and the stirring component 241 is configured to move downward relative to the bin bottom wall 211, so as to be retracted into the storage chamber 250 through the through groove 2111, and to move upward relative to the bin bottom wall 211, so as to extend into the first feed bin 210 through the through groove 2111. In this way, when the stirring component 241 is in a retracted state, the stirring component 241 does not occupy space in the first feed bin 210, and thus does not hinder the sample containers from flowing to the feeding mechanism 230.

It should be noted that when the stirring component 241 includes the first stirring part 241a and the second stirring part 241b, the bin bottom wall 211 is provided with two through grooves 2111 correspondingly, and a width of each of the through grooves 2111 is slightly greater than a width of the corresponding stirring part.

It should also be noted that the storage chamber 250 may be defined by an independent bin body, or may be defined by a component such as the first housing 110, etc.

When the stirring component 241 moves relative to the bin bottom wall to stir the sample containers, in some embodiments of the disclosure, the feeding mechanism 230 includes a fixed component, a movement component and a second driving component 233, the fixed component is connected to the first feed bin 210, the movable component is movably connected to the fixed component and is capable of being driven by the second driving component to move relative to the fixed component, so as to transport the single sample container. In some specific embodiments, the first driving component and the second driving component are the same driving component, such that one driving component may not only drive the feeding mechanism 230 to complete feeding, but also drive the stirring mechanism 240 to complete stir.

In some embodiments, the feeding mechanism 230 may be a chain-plate feeding mechanism including a frame used as the fixed component and a transmission belt used as the movable component. The transmission belt is annular and is arranged on the frame, several protruded transmission plates are arranged at an outer side of the transmission belt, a length of the transmission plate is greater than a length of the sample container, and a distance between adjacent transmission plates is greater than the diameter of the sample container. In this way, a transfer space which may accommodate the sample containers is formed between adjacent transmission plates, the transmission belt rotates with driving of the second driving component, thereby driving the sample containers to lift upward, and after the sample containers are lifted to reach a highest point, the sample containers will fall onto the transfer component 300 under gravity. In some embodiments, the bin bottom wall 211 of the first feed bin 210 is inclinedly arranged toward the feeding mechanism 230, such that the sample containers may lean against the transmission belt of the feeding mechanism 230 under gravity. The transmission belt of the feeding mechanism 230 may be inclinedly arranged, and a lowest point of the transmission belt is lower than a lowest point of the bin bottom wall 211, such that the sample containers at the bottom of the first feed bin 210 may also enter the transfer space of the feeding mechanism 230.

In some embodiments, with reference to FIG. 6 and FIG. 9, the feeding mechanism 230 may also be a push-plate feeding mechanism including at least one first feeding component, of which each includes a single fixed plate 231 and a single movable plate 232. In the same first feeding component, the movable plate 232 and the fixed plate 231 are arranged side by side, and the movable plate 232 is parallel to the fixed plate 231, for example, the movable plate 232 and the fixed plate 231 are arranged side by side in a direction from the first feed bin 210 to the feeding mechanism 230, and the movable plate 232 is closer to the first feed bin 210 than the fixed plate 231. The fixed plate 231 is fixedly arranged relative to the first feed bin 210, the second driving component is connected to the movable plate 232 to drive the movable plate 232 to reciprocate between a first position and a second position relative to the fixed plate 231. When the movable plate 232 is located at the first position, a top end of the movable plate 232 is lower than a top end of the fixed plate 231, the top end of the movable plate 232 may receive the single sample container; and when the movable plate 232 is located at the second position, the top end of the movable plate 232 is not lower than the top end of the fixed plate 231, the single sample container is transferred from the top end of the movable plate 232 to the top end of the fixed plate 231. In this way, the single sample container may be sorted out and lifted as the movable plate 232 reciprocates.

In general, the feeding mechanism 230 includes multiple first feeding components, such that a lifting range of the feeding mechanism 230 may be increased, and thus the first feed bin 210 may have a sufficient depth, to causes the first feed bin 210 to have a greater capacity. For example, the feeding mechanism 230 includes three first feeding components, fixed plates 231 of the three first feeding components constitute the foregoing fixed component, and movable plates 232 of the three first feeding components constitute the foregoing movable component. The three first feeding components are arranged in a direction from being away from the stirring mechanism 240 to close to the stirring mechanism 240, that is, multiple fixed plates 231 and multiple movable plates 232 are sequentially arranged at intervals, and a top surface of the fixed plate 231 at each level is sequentially lowered. Explanations are made with the first feeding component located in the middle, when the movable plate 232 moves to the first position, the top end thereof is not higher than the top end of the fixed plate 231 of an adjacent first feeding component which is closer to the stirring component 241, and when the movable plate 232 moves to the second position, the top end thereof is not lower than the top end of the fixed plate 231 of the same feeding component. Explanations are made with the first feeding component closest to the stirring component 241, when the movable plate 232 moves to the first position, the top end thereof is not higher than the bin bottom wall 211, and when the movable plate 232 moves to the second position, the top end of the movable plate 232 is not lower than the top end of the fixed plate 231 of the same feeding component. Specifically, in the embodiment shown in FIG. 6 and FIG. 9, in the direction from being away from the stirring mechanism 240 to close to the stirring mechanism 240, that is, a direction from left to right in the figures, the fixed plates 231 are named as a first level fixed plate 231, a second level fixed plate 231 and a third level fixed plate 231 respectively, and the movable plates 232 are named as a first level movable plate 232, a second level movable plate 232 and a third level movable plate 232 respectively. Then, when the third level movable plate 232 is located at the first position, the third level movable plate 232 is lower than the bin bottom wall 211 of the first feed bin 210, such that the sample containers may roll to the top end of the third level movable plate 232; then, when the third level movable plate 232 moves upward to the second position, the third level movable plate 232 is flush with the top end of the third level fixed plate 231, and the sample containers automatically roll down to the top end of the third level fixed plate 231. However, when the second level movable plate 232 is located at the first position, the second level movable plate 232 is lower than the top end of the third level fixed plate 231, such that the sample containers may roll to the top end of the second level movable plate 232; then, when the second level movable plate 232 moves upward to the second position, the second level movable plate 232 is flush with the top end of the second level fixed plate 231, and the sample containers automatically roll down to the top end of the second level fixed plate 231. Accordingly, it is understood that the single sample container may be eventually transported to the top end of the first level fixed plate 231, and falls down from the top end of the first level fixed plate 231 to the transfer component 300. In some embodiments, the bin bottom wall 211 of the first feed bin 210 is inclinedly arranged toward the feeding mechanism 230, such that the sample containers may lean against the movable plate 232 of the feeding mechanism 230 under gravity.

In some embodiments, the movable plates 232 are fixedly connected to each other, such that the movable plates 232 may be uniformly driven by the second driving component. Furthermore, with reference to FIG. 9, the stirring mechanism 240 may be fixedly connected to the movable plates 232, such that when the second driving component drives the movable plate 232 to move relative to the fixed plate 231, the second driving component may also synchronously drive the stirring mechanism 240 to move up and down relative to the bin bottom wall 211.

When the feeding mechanism 230 includes the first feeding component, in some embodiments of the disclosure, the feeding mechanism 230 may further include a second feeding component including single fixed plate 231 or single movable plate 232. When the second feeding component includes the single fixed plate 231, the fixed plate 231 may be used as a highest or lowest level fixed plate of the whole feeding mechanism 230. When the second feeding component includes the single movable plate 232, the movable plate 232 may be used as a highest or lowest level movable plate of the whole feeding mechanism 230. At this time, the fixed plate 231 of each first feeding component and the fixed plate 231 of each second feeding component constitute the foregoing fixed component, and the movable plate 232 of each first feeding component and the movable plate 232 of each second feeding component constitute the foregoing movable component.

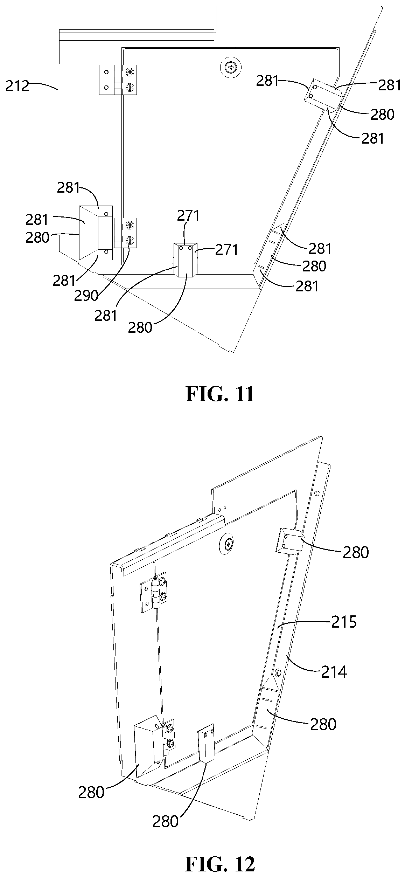

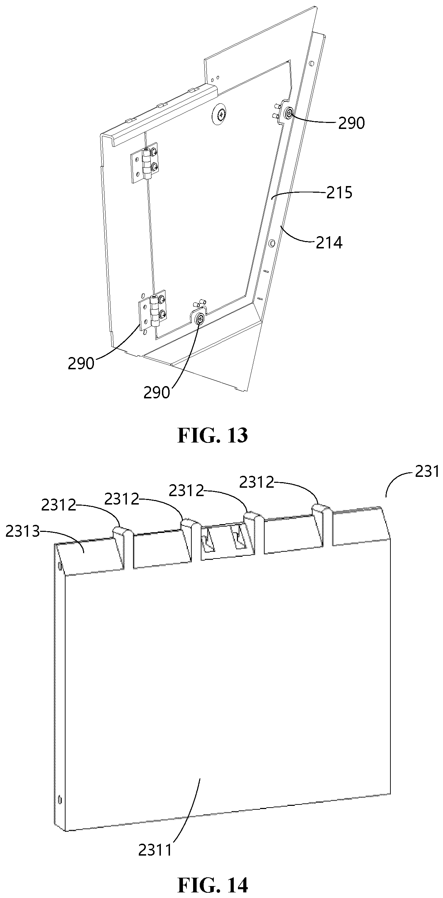

When the feeding mechanism 230 includes the first feeding component and the second driving component, in some embodiments of the disclosure, with reference to FIG. 14, in the first feeding component, the fixed plate 231 includes a main body 2311 and at least two protrusions 2312, the at least two protrusions 2312 are connected to an upper end of the main body 2311 and are arranged at intervals in an extension direction of the upper end of the main body 2311 which is a left-right direction shown in FIG. 11. The main body 2311 is a square plate body, the protrusions 2312 are arranged on an upper end surface of the main body 2311 by fixed connection, or the protrusions 2312 and the main body 2311 are integrally molded, making the structure more stable. Since the protrusions 2312 are added to a top end of the main body 2311, ends of the protrusions 2312 away from the main body 2311 are a top end of the fixed plate 231, a height difference between the top end of the fixed plate 231 and the top end of the main body 2311 is a height of the protrusion 2312, the sample containers are supported by the protrusions 2312, and the sample containers are placed at top ends of the protrusions 2312 in a horizontal pose when the sample containers are poured, that is, the sample containers may lie on the top end of the fixed plate 231.

In this embodiment, four protrusions 2312 are arranged at the top end of the main body 2311 and are uniformly distributed along the upper end surface of the main body 2311, and a distance between two adjacent ones of the protrusions 2312 is less than a length of the sample container, to prevent that the sample containers do not fall down by passing through a gap between the two protrusions 2312 when the sample containers are poured, while the sample containers may pass through the gap between two adjacent ones of the protrusions 2312 when the sample containers are in an upright or inclined pose. Furthermore, there is also a gap between the protrusion 2312 close to a left or right side edge of the main body 2311 and the side edge of the main body 2311, and the sample containers may also pass through the gap when the sample containers are in an upright or inclined pose.

A separation surface 2313 arranged inclinedly is formed at the upper end of the main body 2311, and the separation surface 2313 is inclinedly arranged downward in a direction toward the movable plate 232. Specifically, the bin bottom wall 211 of the first feed bin 210, the movable plate 232 and the fixed plate 231 are sequentially arranged in the front-rear direction, the separation surface 2313 is specifically inclined downward toward the bin bottom wall 211, and the sample containers falling from the above gap may be guided by the separation surface 2313 to fall back on the bin bottom wall 211, to prevent that the sample containers are pushed upward in an upright or inclined pose, while the sample containers in a horizontal pose may lie on the top end of the fixed plate 231, to ensure that the sample containers are output in a horizontal pose, which helps to improve output efficiency of the sample processing unit. In some embodiments, an inclined angle of the separation surface 2313 is set to be greater than 30°, for example, the inclined angle of the separation surface 2313 may be 45°, 60° or the like, such that the sample containers may fall down along the separation surface 2313, to prevent the sample containers from getting stuck on the separation surface 2313.

The protrusion 2312 shown in FIG. 14 has a structure of a flat plate body, and a size of a width of the protrusion 2312 in the left-right direction of the fixed plate 231 is much smaller than a size of the sample container, and the protrusion 2312 occupies a small space on the upper end surface of the main body 2311, to prevent the sample containers from placing at the top end of the protrusion 2312 in an upright or inclined pose. In some other embodiments, the protrusion 2312 may also be provided in a cylindrical structure, a polygonal pillar structure, or other structures. Furthermore, the above embodiments are only an example, and the number of the protrusions 2312 is not limited to four, and two, three or more protrusions 2312 may be provided, which is specifically selected according to sizes of the fixed plate 231 and the sample container. In order to ensure that the feeding mechanism pushes the single sample container to output the single sample container, in the embodiments, sizes of lengths of both the fixed plate 231 and the movable plate 232 in the left-right direction thereof are not greater than a total length of two sample containers. Of course, in some other embodiments, in case that it needs to output two or more sample containers simultaneously, the sizes of lengths of both the fixed plate 231 and the movable plate 232 may also be set to be greater than the total length of two sample containers, that is, two or more sample containers may lie on top ends of the fixed plate 231 and the movable plate 232 simultaneously.

With reference to FIG. 14, an end surface of each protrusion 2312 away from the main body 2311 is provided as a first inclined surface, and the first inclined surface is inclinedly arranged downward in a direction away from the movable plate 232. When the sample containers are transferred and moved from the top end of the movable plate 232 to the top end of the protrusion 2312, the sample containers are guided by the first inclined surface, such that it is more easy for the sample containers to roll onto a discharge port or the movable plate 232 of the first feeding component at a next level. As shown in the figure, an inclined direction of the first inclined surface is opposite to an inclined direction of the separation surface 2313, to ensure that the sample containers in a horizontal pose may be smoothly transferred, while the sample containers in a vertical or inclined pose may fall back downward. In some embodiments, an inclined angle of the first inclined surface is set to be not greater than 30°, which facilitates the sample containers to flow to the discharge port or the movable plate 232 at the next level. For example, the inclined angle of the first inclined surface may be 20°, 25°, 30° or the like, to prevent that the inclined angle is too large, causing the sample containers to roll too fast, and play a role of protecting the sample containers.

Considering a situation where the sample container may lean inclinedly, when the sample container is in an inclinedly leaning pose, a lower end of the sample container gets stuck between two adjacent ones of the protrusions 2312, and an upper end of the sample container may lean on a side plate or other upright plate bodies of the frame. In order to solve this problem, two or more protrusions 2312 are arranged reasonably, in some embodiments, the distance between two adjacent ones of the protrusions 2312 is set to be greater than the maximum diameter of the sample container, here the maximum diameter of the sample container refers to a diameter of the lid of the sample container. Since in a usual situation, the diameter of the lid of the sample container is greater than a diameter of a tube body, which ensures that the sample container may pass between any two adjacent ones of the protrusions 2312 and fall down along the separation surface 2313, to prevent the sample container from leaning at the top end of the movable plate 232 in an inclinedly leaning pose.

It should be noted that since different sample containers have different lengths, the first feed bin 210 may simultaneously store multiple sample containers with different lengths. In order to allow distribution of the protrusions 2312 to meet feeding requirements of sample containers with different sizes, each of the sample containers may be output in a horizontal pose. In some specific examples, the distance between two adjacent ones of the protrusions 2312 needs to be less than a minimum length of the sample container, and a distance between three adjacent ones of the protrusions 2312 needs to be less than a maximum length of the sample container, to ensure that the sample containers in an upright or inclined pose may pass through adjacent protrusions 2312 to fall down, while the sample containers in a horizontal pose may be normally pushed and ouput.

In some other embodiments, the at least two protrusions 2312 are arranged at an interval at the upper end of the main body 2311, and are symmetrically arranged with a central axis of the main body 2311 as a symmetry axis. Explanations are made with FIG. 14 as an example, four protrusions 2312 are divided into two groups, each group includes two protrusions 2312, the protrusions 2312 of the two groups are symmetrically arranged about the central axis on the upper end surface of the main body 2311, the protrusions 2312 of the two groups may simultaneously support the sample containers in a horizontal pose, and a distance spaced apart between the protrusions 2312 of the two groups allows the sample container to pass through. Alternatively, one of the protrusions 2312 may be located at a position where the central axis is located, and several protrusions 2312 at two sides of the central axis are symmetrically arranged about the protrusion 2312 at the position of the central axis. In this embodiment, layout and distance design of the protrusions 2312 may use structures of the foregoing embodiments, that is, the distance between two adjacent ones of the protrusions 2312 needs to be less than the minimum length of the sample container, and the distance between three adjacent ones of the protrusions 2312 needs to be less than the maximum length of the sample container.

Based on the first embodiment, in some embodiments of the disclosure, with reference to FIG. 4, FIG. 5, FIG. 7 and FIG. 8, the bin side wall 212 includes multiple side plates arranged sequentially in a circumferential direction of the bin bottom wall 211, one of the side plates is provided with a first opening 2121 that allows the sample containers to flow from the second feed bin 220 into the first feed bin 210, at least one of other remaining side plates is provided with a second opening 2122 for a user to interact with the first feed bin 210, the first feed bin 210 further includes a first door body 213 connected to the side plate provided with the second opening 2122, to open or close the second opening 2122. In this way, when the sample containers are blocked in the feed bin or other failure problems occur, the first door body 213 may be opened for troubleshooting.

Specifically, the bin side wall 212 is a rectangular or approximately rectangular housing structure including four side plates arranged sequentially in the circumferential direction of the bin bottom wall 211, and taking a direction in FIG. 4 as an example, the four side plates are named as a front side plate, a right side plate, a rear side plate and a left side plate respectively. The first opening 2121 is arranged on the right side plate, and the second opening 2122 and the first door body 213 are arranged on at least the front side plate, therefore the user may perform maintenance from a front side of the first feed bin 210. In general, the front side of the first feed bin 210 faces a front side of the first housing 110 (i.e., a position where the user operates), and therefore it may facilitate the user to reorganize the sample containers in the feed bin. If there are also openings for the user to perform maintenance arranged at other sides of a sample processing module, the second opening 2122 and the first door body 213 may also be arranged on other side plates of the bin side wall 212, such as the rear side plate. In some specific embodiments, the first door body 213 is rotatably connected to the bin side wall 212 by a hinge, and is provided with a locking mechanism to lock the first door body 213 and the bin side wall 212, and the locking mechanism may be a magnetic attraction locking mechanism, a latch locking mechanism, etc.

When the first feed bin 210 further includes the first door body 213, in some embodiments of the disclosure, with reference to FIG. 1, the first housing 110 includes a second door body 112 and is provided with a third opening 111 corresponding to the second opening 2122, and the second door body 112 opens and closes the third opening 111. In this way, the user may reorganize the sample containers in the first feed bin 210 by opening only the second door body 112 and the first door body 213, it is unnecessary to remove the first feed bin 210 from the first housing 110, and operations are more convenient. In some specific embodiments, the second door body 112 is rotatably connected to the bin side wall 212 by a hinge, and is provided with a locking mechanism to lock them, and the locking mechanism may be a magnetic attraction locking mechanism, a latch locking mechanism, etc.

It should be noted that when the sample loading component 200 includes multiple first feed bins 210, and multiple first feed bins 210 are distributed in a direction close to the third opening 111 and a direction away from the third opening 111, adjacent first feed bins 210 are provided with a common side plate, and the second opening 2122 and the first door body 213 are arranged on the common side plate. In this way, the sample containers in first feed bins 210 located backward may be reorganized without removing the first feed bin 210. Taking FIG. 4 and FIG. 5 as an example, the sample loading component 200 includes two first feed bins 210 distributed in the front-rear direction. The rear side plate of the previous first feed bin 210 and the front side plate of the latter first feed bin 210 are a common side plate. After the second door body 112, the previous first door body 213 and the latter first door body 213 are sequentially opened in the front-rear direction, the sample containers in the latter first feed bin 210 may be reorganized.

It may be known from the foregoing descriptions that the sample containers in the first feed bin 210 should be prevented from standing upright; however, some specific structures or parts of the first feed bin 210 may make the sample containers easier to stand up and thus get stuck. Based on this, the first feed bin 210 in some embodiments of the disclosure is also provided with a guide component 280 corresponding to these specific structures or parts, and the guide component 280 is provided with a guide surface 281 configured to guide the sample containers to slide along the guide surface 281 to change poses of the sample containers when the sample containers abut against the guide surface 281. In this way, it may alleviate the problem of standing of the sample containers when the sample containers abut against the specific structures or parts of the first feed bin 210. In some specific embodiments, the guide surface 281 is an inclined surface or an arcuate surface.

The following descriptions will be made with reference to specific parts or structures which are commonly found in the first feed bin 210 and easily cause the sample containers to get stuck. For example, with reference to FIG. 11 to FIG. 13, the bin side wall 212 includes multiple side plates arranged sequentially in a circumferential direction of the bin bottom wall 211, and when the sample container is located at a position of an included angle between side plates arranged adjacently, the sample container is easily blocked by the side plates at two sides of the side plates and gets stuck at this position. Based on this, in this embodiment, for all pairs of adjacent side plates, the guide component 280 is arranged at an included angle between at least one pair of adjacent side plates, and when the sample container moves to this position, the sample container may be guided by the guide component 280 to change the pose of the sample container, thereby preventing the sample container from getting stuck. Taking a first side plate 214 and a second side plate 215 shown in FIG. 12 as an example, the first side plate 214 is a left side plate of the first feed bin 210, and the second side plate 215 is a front side plate of the first feed bin 210. When the guide component 280 is arranged at the included angle, the included angle of 90° between the two side plates may be removed, and may be replaced by an obtuse angle between the first side plate 214 and the guide component 280 and an obtuse angle between the second side plate 215 and the guide component 280, such that the sample container may be prevented from getting stuck. In this embodiment, a guide surface 281 is also arranged at a top of the guide component 280, such that the lower end of the sample container may be prevented from abutting against an upper end of the guide component 280 and thus getting stuck.

For another example, the first feed bin 210 further includes a functional structure 290 protruded from an inner surface of the bin side wall 212. It should be noted that specific structure and function of the functional structure 290 are not limited in this embodiment, and the functional structure 290 includes, but is not limited to a locking mechanism of the door body, a hinge structure between the door body and the feed bin, etc. Since the functional structure is arranged to be protruded, the sample container also easily abuts against the functional structure and thus gets stuck.

Based on this, in some embodiments, the guide component 280 is arranged at a side of the functional structure 290 facing a first opening 2121 that allows the sample containers to flow from the second feed bin 220 into the first feed bin 210. The guide component 280 is provided with the guide surface 281 on at least a side of the guide component 280 facing the first opening 2121, such that after the sample container enters the first feed bin 210 through the first opening 2121, the sample container may be prevented from getting stuck between the first opening 2121 and the functional structure 290 due to acting force of other sample containers. In some other embodiments, the guide component 280 is arranged at a side of the functional structure 290 facing the feeding mechanism 230, and the guide component 280 is provided with the guide surface 281 on at least a side of the guide component 280 facing the feeding mechanism 230, such that at least the sample container may be prevented from getting stuck between the feeding mechanism 230 and the functional structure 290 due to acting force of other sample containers. In some other embodiments, the guide component 280 is arranged at an upper side of the functional structure 290, and the guide component 280 is provided with the guide surface 281 on at least an upper side of the guide component 280, such that at least the lower end of the sample container may be prevented from abutting against an upper end of the functional structure 290 and thus getting stuck. In some other embodiments, the guide component 280 is arranged at a lower side of the functional structure 290, and the guide component 280 is provided with the guide surface 281 on at least a lower side of the guide component 28, such that at least the upper end of the sample container may be prevented from abutting against a lower end of the functional structure 290 and thus getting stuck. In some other embodiments, the guide component 280 is arranged to cover an outer side of the functional structure 290, and at this time, the guide component 280 is provided with the guide surface 281 on a corresponding side according to a direction in which the container gets stuck, such that the sample container may be prevented from abutting against the functional structure 290 and thus getting stuck.

It should be noted that the guide component 280 may be selectively arranged at a side of the functional structure 290 or arranged to cover the functional structure 290, according to a direction in which the sample container easily gets stuck. It should also be noted that the guide surface 281 may be arranged on each side surface of the guide component 280.

A second embodiment of the disclosure proposes a sample loading unit, including a first housing 110 and a sample loading component 200 arranged in the first housing 110. The sample loading component 200 includes a first feed bin 210 and a feeding mechanism 230, the first feed bin 210 is formed with a storage space and a first opening 2121 connected with the storage space, the storage space stores sample containers flowing into the storage space through the first opening 2121, and a feeding mechanism 230 is connected to the first feed bin 210 and is configured to output the sample containers in the storage space one by one. The first feed bin 210 and the feeding mechanism 230 of this embodiment may be understood with reference to the foregoing embodiments.

In this embodiment, the storage space is connected with the first opening 2121 through a transmission channel 261, that is, the transmission channel 261 is arranged at an interior of the first feed bin 210, and the transmission channel 261 is configured to taper toward the storage space in an inflow direction of the sample containers, to limit quantity of the sample containers flowing into the storage space. Flow of the sample containers is limited by the transmission channel 261, such that it may prevent a large number of sample containers from entering the storage space in a short time, and the problem of blockage of the sample containers in the first feed bin 210 is alleviated. It should be noted that the transmission channel 261 in this embodiment may be defined by structure of the first feed bin 210 itself, or may be defined by other components located in the first feed bin 210 separately, or may be defined by other components located in the first feed bin 210 and the first feed bin 210 together.

Based on the second embodiment, in some embodiments of the disclosure, the sample loading component 200 further includes a flow limiting mechanism 260 defining the transmission channel 261. It should be noted that "defines the transmission channel 261 transmitting the sample containers" mentioned here includes both a solution in which the flow limiting mechanism 260 itself may define the transmission channel 261, and a solution in which the flow limiting mechanism 260 and the first feed bin 210 define the transmission channel 261 together.

When the flow limiting mechanism 260 defines the transmission channel 261 transmitting the sample containers, in some embodiments of the disclosure, with reference to FIG. 4 to FIG. 8, the bin side wall 212 is provided with a first opening 2121 that allows the sample containers to flow from the second feed bin 220 into the first feed bin 210, here the first opening 2121 has a shape suitable for a batch of sample containers to pass through and easy to form, such as a rectangular shape as shown in the figures. The first opening 2121 may be arranged at any side of the bin side wall 212, such as a side directly facing the feeding mechanism 230 as shown in FIG. 6.

The flow limiting mechanism 260 includes a flow limiting component 262 of which at least a portion is extended into the storage space. In this embodiment, the transmission channel 261 is formed between the extended portion of the flow limiting component 262 and a corresponding structure of the first feed bin 210. In other words, at least a portion of the transmission channel 261 of this embodiment is arranged at an interior of the first feed bin 210. Specifically, as shown in FIG. 6 to FIG. 8, the transmission channel 261 includes a guide space 261a between the extended portion of the flow limiting component 262 and the first opening 2121, and the guide space 261a is connected with the first opening 2121 and is arranged to open toward at least the bin bottom wall 211. When the sample containers flow into the first feed bin 210, the sample containers pass through the guide space 261a first. If there is a large number of sample containers in the first feed bin 210 at this time, newly entered sample containers may temporarily stay in the guide space 261a due to accumulation; however, since the guide space 261a is arranged to open toward the bin bottom wall 211, the sample containers are in an unstable state, and when the number of the sample containers below the guide space 261a is reduced (for example, when the sample containers are transferred toward the feeding mechanism 230 through stir of a stirring mechanism 240), the sample containers in the guide space 261a may automatically drop under gravity. Therefore, the flow limiting component 262 of this embodiment may play a certain guiding role in addition to limiting the flow, which may prevent the sample containers from being blocked in the transmission channel 261 due to tapered arrangement of the transmission channel 261.

It should be noted that the guide space 261a may be arranged to open toward the bin side wall, in addition to opening toward the bin bottom wall 211. For example, taking FIG. 4 as an example, when a front side and/or a rear side of the flow limiting component 262 is not extended to a side plate at a corresponding side of the bin side wall 212, a front side and/or a rear side of the guide space 261a is also arranged to open, which may remove limitation of the flow limiting component 262 on the sample containers in the front-rear direction, such that the sample containers detach from the guide space 261a more easily.

In some specific embodiments, in a direction toward the bin bottom wall 211, a distance between the flow limiting component 262 and the first opening 2121 increases, that is, a width of the guide space 261a increases. In other words, a local area directly connected with the first opening 2121 and having a gradually increased width is formed in the transmission channel 261 tapered as a whole, thereby further enhancing a guiding function, preventing the flow limiting component 262 from hindering downward movement of the sample containers, and thus preventing blockage in the transmission channel 261. Taking FIG. 6 as an example, the flow limiting component 262 is a flow limiting plate inclinedly arranged as a whole, to form the guide space 261a gradually increased in a width direction. In some other specific embodiments, the flow limiting component 262 may be a flow limiting seat provided with an inclined flow limiting surface at a side facing the first opening 2121, the flow limiting surface forms the guide space 261a with the first opening 2121.

When the flow limiting mechanism 260 includes the foregoing flow limiting component 262 of which at least a portion is extended into the first feed bin 210, in some embodiments of the disclosure, with reference to FIG. 4 to FIG. 8, the flow limiting component 262 is arranged at an upper side of the first opening 2121 and is inclinedly extended toward the bin bottom wall 211, and the flow limiting component 262, the bin side wall 212 and the bin bottom wall 211 define the transmission channel 261 together. In general, in order to facilitate the user to pour, a height of the second feed bin 220 is higher than a height of the first feed bin 210, and therefore the sample containers will flow into the first feed bin 210 from a high place. In this embodiment, the flow limiting component 262 is arranged at the upper side of the first opening 2121, which may play a better flow limiting function on the sample containers flowing downward.

Based on the second embodiment, in some embodiments of the disclosure, with reference to FIG. 1, the housing component 100 further includes a second housing 120, the first housing 110 and the second housing 120 are independent of each other, for example, the first housing 110 and the second housing 120 are arranged side by side. With reference to FIG. 1 and FIG. 2, the sample loading component 200 further includes a second feed bin 220 connected with the first feed bin 210, the second feed bin 220 is located in the second housing 120, that is, used as an outer bin of the sample loading component 200. The second feed bin 220 is provided with an inlet 221 for the user to pour the sample containers, the inlet 221 is arranged at a position where it facilitates the user to pour, for example, at a top of the second feed bin 220. Based on the above structures, the user may directly pour the sample containers into the second feed bin 220, and the sample containers flow into the first feed bin 210 under gravity.

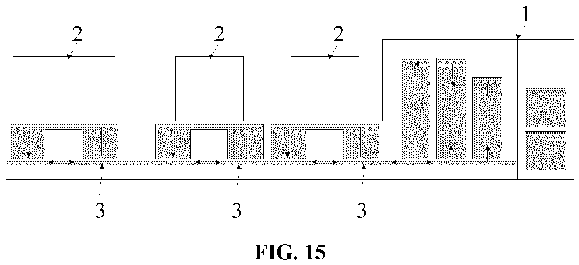

A third embodiment of the disclosure further proposes a sample analysis system. With reference to FIG. 15, the sample analysis system includes a sample analysis unit 2, a transmission unit 3 and the sample processing unit 1 in the foregoing embodiments. The sample analysis unit 2 is configured to analyze a sample in the single sample container. The transmission unit 3 is connected to the sample processing unit 1 and the sample analysis unit 2, and is configured to transport a single sample container or a sample carrying component output from the sample processing unit to the sample analysis unit 2.

The sample analysis unit 2 includes more than one sample analyzer configured to analyze the sample, two sample analyzers are shown in FIG. 14, and the transmission unit 3 includes multiple transport rails arranged sequentially. In some embodiments, an externally input container under test (a sample container containing a t sample under test) is transferred to the sample carrying component such as a sample rack or the like in the sample processing unit 1, then the sample carrying component is transported to the sample analysis unit 2 by the transmission unit 3, and when the analysis is completed, the sample carrying component may be transported back to the sample processing unit 1 by the transmission unit 3. In some other embodiments, an externally input container under test (a sample container containing a sample under test) is transferred from the sample processing unit 1 to a single tube seat of the transmission unit 3, then the single tube seat is transported to the sample analysis unit 2 by the transmission unit 3, when the analysis is completed, the single tube seat may be transported to the sample processing unit 1 by the transmission unit 3, and then the sample container is transferred from the single tube seat to the sample processing unit 1.

Although the embodiments of the disclosure have been described in detail as above with reference to the drawings, the disclosure is not limited to the above embodiments, and various variations may also be made within knowledge of those of ordinary skill in the art, without departing from the purpose of the disclosure. Furthermore, the embodiments of the disclosure and features in the embodiments may be combined with each other without conflict.

## Claims

1. A sample processing unit (1), comprising:
a sample loading component (200);
a transfer component (300); and
an output component (400),
wherein the sample loading component (200) comprises a first feed bin (210), a second feed bin (220), a feeding mechanism (230) and a flow limiting mechanism (260), the first feed bin (210) comprises a bin bottom wall (211) and a bin side wall (212) connected to the bin bottom wall (211), a storage space is formed by the bin bottom wall (211) and the bin side wall (212) and configured to store sample containers received by the second feed bin (220) and flowing from the second feed bin (220) into the first feed bin (210), the feeding mechanism (230) is connected to the first feed bin (210) and configured to transport the sample containers in the storage space to the transfer component (300) one by one;
the transfer component (300) is configured to receive a single sample container transported by the feeding mechanism (230), and transfer the single sample container to the output component (400);
the output component (400) is configured to receive the single sample container from the transfer component (300), and output the single sample container or at least one said single sample container carried on a sample carrying component; and
wherein when the sample containers flow from the second feed bin (220) into the first feed bin (210), the flow limiting mechanism (260) is configured to limit a quantity of the sample containers flowing into the storage space, and the storage space is configured to be capable of storing a plurality of sample containers.

2. The sample processing unit (1) of claim 1, wherein the flow limiting mechanism (260) is configured to define a transmission channel (261) that transmits the sample containers, the transmission channel (261) is configured to taper toward the storage space in an inflow direction of the sample containers, and the bin side wall (212) is provided with a first opening (2121) that allows the sample containers to flow from the second feed bin (220) into the first feed bin (210), the flow limiting mechanism (260) comprises a flow limiting component (262) of which at least a portion is extended into the storage space; and
wherein the transmission channel (261) comprises a guide space (261a) between the extended portion of the flow limiting component (262) and the first opening (2121), and the guide space (261a) is connected with the first opening (2121) and is arranged to open toward at least the bin bottom wall (211);
and/or, the flow limiting component (262) is arranged at an upper side of the first opening (2121) and is inclinedly extended toward the bin bottom wall (211), and the flow limiting component (262), the bin side wall (212) and the bin bottom wall (211) define the transmission channel (261) together.

3. The sample processing unit (1) of claim 1, wherein the flow limiting mechanism (260) is configured to define a transmission channel (261) that transmits the sample containers, the transmission channel (261) is configured to taper toward the storage space in an inflow direction of the sample containers, and the flow limiting mechanism (260) comprises an adjusting component (263), and is configured to adjust an extension length of the transmission channel (261) in the inflow direction of the sample containers through the adjusting component (263) and/or adjust a size of an outlet of the transmission channel (261) through the adjusting component (263).

4. The sample processing unit (1) of claim 1, wherein the flow limiting mechanism (260) is configured to define a transmission channel (261) that transmits the sample containers, the transmission channel (261) is configured to taper toward the storage space in an inflow direction of the sample containers, and the flow limiting mechanism (260) is arranged at an outer side of the bin side wall (212), the transmission channel (261) is defined at an interior of the flow limiting mechanism (260), and two ends of the transmission channel (261) are respectively connected with the first feed bin (210) and the second feed bin (220).

5. The sample processing unit (1) of any of claims 1 to 4, wherein the flow limiting mechanism (260) is configured to allow a plurality of the sample containers to pass through together,
preferably, the flow limiting mechanism (260) defines a transmission channel (261) that transmits the sample containers; and
wherein a volume of the transmission channel (261) is greater than a sum of volumes of at least two of the sample containers;
and/or, a length of an inlet of the transmission channel (261) is greater than an axial length of a single sample container, and/or, a width of the inlet of the transmission channel (261) is greater than a sum of diameters of at least two of the sample containers;
and/or, a length of an outlet of the transmission channel (261) is greater than an axial length of a single sample container, and/or, a width of the outlet of the transmission channel (261) is greater than a sum of diameters of at least two of the sample containers;
and/or, a length of a cross-section of the transmission channel (261) perpendicular to an inflow direction of the sample containers is greater than an axial length of a single sample container,
and/or, a width of a cross-section is greater than a sum of diameters of at least two of the sample containers,
and/or, an area of a cross-section is greater than a sum of areas of cross-sections of at least two of the sample containers perpendicular to axial directions of the sample containers;
and/or, an area of an inlet of the transmission channel (261) is greater than an area of an outlet of the transmission channel (261).

6. The sample processing unit (1) of any of claims 1 to 5, wherein the flow limiting mechanism (260) is configured to allow the sample containers to pass through continuously.

7. The sample processing unit (1) of any of claims 1 to 6, wherein the sample loading component (200) further comprises a stirring mechanism (240) connected to the first feed bin (210), the stirring mechanism (240) comprises a stirring component (241) and a first driving component, and the stirring component (241) is configured to be capable of being driven by the first driving component, so as to stir the sample containers.

8. The sample processing unit (1) of claim 7, wherein the stirring component (241) is arranged at a bottom of the first feed bin (210) and is capable of being driven by the first driving component to move relative to the bin bottom wall (211), so as to stir the sample containers,
preferably, the stirring component (241) is configured to move relative to the bin bottom wall (211) of the first feed bin (210) in an up-down direction, so as to stir the sample containers, and
more preferably, the stirring component (241) is inclined relative to a horizontal plane, is inclined toward the feeding mechanism (230), and is configured to move up and down relative to the bin bottom wall (211) in an inclined direction.

9. The sample processing unit (1) of claim 8, wherein the stirring component (241) comprises a first stirring part (241a) spaced from the feeding mechanism (230), and a minimum distance between the first stirring part (241a) and the feeding mechanism (230) in an arrangement direction of the first stirring part (241a) and the feeding mechanism (230) is greater than a diameter of the sample container;
and/or, the stirring component (241) comprises a second stirring part (241b) spaced from the feeding mechanism (230), and a maximum distance between the second stirring part (241b) and the feeding mechanism (230) in an arrangement direction of the second stirring part (241b) and the feeding mechanism (230) is less than a diameter of the sample container;
and/or, the stirring component (241) comprises a first stirring part (241a) and a second stirring part (241b) spaced from the first stirring part (241a), the second stirring part (241b) is arranged at a side of the first stirring part (241a) facing the feeding mechanism (230), and a minimum distance between the first stirring part (241a) and the second stirring part (241b) in an arrangement direction of the first stirring part (241a) and the second stirring part (241b) is greater than a diameter of the sample container.

10. The sample processing unit (1) of claim 8, wherein a guide part is arranged at a top of the stirring component (241), and is configured to guide the sample containers to slide along the guide part, so as to change poses of the sample containers while the sample containers abut against the guide part and the stirring component (241) moves up and down relative to the bin bottom wall (211),
preferably, the stirring component (241) comprises a first side and a second side arranged opposite to each other, and the guide part comprises a first guide surface (2411) and a second guide surface (2412) arranged sequentially in a direction pointing from the first side to the second side; and
wherein a distance between the first guide surface (2411) and the bin bottom wall (211) decreases in the direction pointing from the first side to the second side, and a distance between the second guide surface (2412) and the bin bottom wall (211) decreases in a direction pointing from the second side to the first side;
more preferably, the stirring component (241) comprises:
a first stirring part (241a) spaced from the feeding mechanism (230), wherein a minimum distance between the first stirring part (241a) and the feeding mechanism (230) in an arrangement direction of the first stirring part (241a) and the feeding mechanism (230) is greater than a diameter of the sample container, and the first guide surface (2411) and the second guide surface (2412) are arranged at a top of the first stirring part (241a); and/or
a second stirring part (241b) spaced from the feeding mechanism (230), wherein a maximum distance between the second stirring part (241b) and the feeding mechanism (230) in an arrangement direction of the second stirring part (241b) and the feeding mechanism (230) is less than a diameter of the sample container, and the first guide surface (2411) and the second guide surface (2412) are arranged at a top of the second stirring part (241b).

11. The sample processing unit (1) of any of claims 8 to 10, wherein the feeding mechanism (230) comprises a fixed component (231), a movable component (232) and a second driving component (233), the fixed component (231) is connected to the first feed bin (210), the movable component (232) is movably connected to the fixed component (231) and is capable of being driven by the second driving component (233) to move relative to the fixed component (231), so as to transport the single sample container;
preferably, the first driving component and the second driving component (233) are a same driving component.

12. The sample processing unit (1) of any of claims 1 to 11, wherein the bin side wall (212) comprises a plurality of side plates arranged sequentially in a circumferential direction of the bin bottom wall (211), and wherein one of the side plates is provided with a first opening (2121) that allows the sample containers to flow from the second feed bin (220) into the first feed bin (210), at least one of other side plates is provided with a second opening (2122) for a user to interact with the first feed bin (210), the first feed bin (210) further comprises a first door body (213), connected to the side plate provided with the second opening (2122), that is configured to open or close the second opening (2122), and
wherein the sample processing unit (1) further comprises a housing component (100), wherein the housing component (100) comprises a first housing (110) and a second housing (120) which are independent of each other, the first feed bin (210), the transfer component (300) and the output component (400) are arranged in the first housing (110), the second feed bin (220) is arranged in the second housing (120), the first housing (110) comprises a second door body (112) and is provided with a third opening (111) corresponding to the second opening (2122), and the second door body (112) is configured to open or close the third opening (111).

13. The sample processing unit (1) of any of claims 1 to 12, wherein the first feed bin (210) further comprises a guide component (280) provided with a guide surface (281), the guide surface (281) is configured to guide the sample containers to slide along the guide surface (281), so as to change poses of the sample containers while the sample containers abut against the guide surface (281); and
wherein the sample processing unit (1) comprises at least one of following arrangements:
the bin side wall (212) comprises a plurality of side plates arranged sequentially in a circumferential direction of the bin bottom wall (211), and for all pairs of adjacent side plates, the guide component (280) is arranged at an included angle of at least one pair of adjacent side plates;
and/or, the first feed bin (210) further comprises a functional structure (290) protruded from an inner surface of the bin side wall (212), and the guide component (280) is arranged at a side of the functional structure (290) facing a first opening (2121) that allows the sample containers to flow from the second feed bin (220) into the first feed bin (210);
and/or, the first feed bin (210) further comprises a functional structure (290) protruded from an inner surface of the bin side wall (212), and the guide component (280) is arranged at a side of the functional structure (290) facing the feeding mechanism (230);
and/or, the first feed bin (210) further comprises a functional structure (290) protruded from an inner surface of the bin side wall (212), and the guide component (280) is arranged at an upper side of the functional structure (290);
and/or, the first feed bin (210) further comprises a functional structure (290) protruded from an inner surface of the bin side wall (212), and the guide component (280) is arranged at a lower side of the functional structure (290);
and/or, the first feed bin (210) further comprises a functional structure (290) protruded from an inner surface of the bin side wall (212), and the guide component (280) is arranged to cover an outer side of the functional structure (290).

14. The sample processing unit (1) of any of claims 1 to 13, wherein the feeding mechanism (230) comprises at least one first feeding component and a second driving component (233), the at least one first feeding component comprises a single movable plate (232) and a single fixed plate (231) arranged side by side, the single fixed plate (231) is fixed relative to the first feed bin (210), the second driving component (233) is connected to the single movable plate (232), so as to drive the single movable plate (232) to reciprocate between a first position and a second position relative to the single fixed plate (231), and wherein while the single movable plate (232) is at the first position, a top end of the single movable plate (232) is lower than a top end of the single fixed plate (231), the top end of the single movable plate (232) is configured to receive the single sample container; and while the single movable plate (232) is at the second position, the top end of the single movable plate (232) is not lower than the top end of the single fixed plate (231), the single sample container is transferred from the top end of the single movable plate (232) to the top end of the single fixed plate (231); and
wherein the single fixed plate (231) comprises a main body (2311) and at least two protrusions (2312) supporting the single sample container, the at least two protrusions (2312) are connected to an upper end of the main body (2311) and are arranged at intervals in an extension direction of the upper end of the main body (2311), a distance between two adjacent protrusions (2312) is less than a length of a single sample container, a separation surface (2313) arranged inclinedly is formed at the upper end of the main body (2311), and in the first feeding component, the separation surface (2313) is inclinedly arranged downward in a direction toward the single movable plate (232),
preferably, the distance between two adjacent protrusions (2312) is greater than a diameter of the sample container; and/or, the at least two protrusions (2312) are symmetrically arranged at the upper end of the main body (2311) with a central axis of the main body (2311) as a symmetry axis.

15. A sample analysis system comprising:
the sample processing unit (1) of any one of claims 1 to 14;
a sample analysis unit (2), configured to analyze a sample in the single sample container; and
a transmission unit (3), connected to the sample processing unit (1) and the sample analysis unit (2), and configured to transport the single sample container or the sample carrying component output from the sample processing unit (1) to the sample analysis unit (2).
